# EUROPÄISCHE PATENTSCHRIFT

(11) **EP 1 365 001 B1**
(45) Veröffentlichungstag und Bekanntmachung des Hinweises auf die Patenterteilung: **03.01.2007**
(21) Anmeldenummer: 03009677.0
(22) Anmeldetag: 30.04.2003
(51) Int. Cl.: C09K 19/30, C09K 19/42

(54) **Flüssigkristallines Medium**
Liquid crystalline medium
Milieu liquide cristallin

(30) Priorität: 24.05.2002 DE 10223061
(43) Veröffentlichungstag der Anmeldung: 26.11.2003
(60) Teilanmeldung: 06013446.7
(73) Patentinhaber: Merck Patent GmbH, 64293 Darmstadt (DE)
(72) Erfinder: Heckmeier, Michael, Dr., 69502 Hemsbach (DE); Schuler, Brigitte, 63762 Gross-Ostheim (DE); Saito, Izumi, 64285 Darmstadt (DE); Reiffenrath, Volker, 64380 Rossdorf (DE); Lüssem, Georg, Dr., 64372 Ober-Ramstadt (DE); Hock, Christian, 63814 Mainaschaff (DE)

(56) Entgegenhaltungen:
- EP-A- 0 844 229
- EP-A- 0 844 295
- EP-A- 1 182 186
- EP-A- 1 302 523
- DE-A- 10 124 480
- DE-A- 10 243 776

## Beschreibung

Die vorliegende Erfindung betrifft ein flüssigkristallines Medium, sowie dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens erkannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nichtlinearen Elementen zur Schaltung einzelner Bildpunkte (MFK-Anzeigen) Medien mit grosser positiver dielektrischer Anisotropie, breiten nematischen Phasen, relative niedriger Doppelbrechung, sehr hohem spezifischen Widerstand, guter UV- und Temperaturstabilität und geringerem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit grosser Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKOGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Es besteht somit immer noch ein grosser Bedarf nach MFK-Anzeigen mit sehr hohem spezifischen Widerstand bei gleichzeitig grossem Arbeitstemperaturbereich, kurzen Schaltzeiten auch bei tiefen Temperaturen und niedriger Schweller spannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- lagerstabil, auch bei extrem tiefen Temperaturen
- Schaltbarkeit bei extrem tiefen Temperaturen (out-door-use, Automobil, Avionik)
- erhöhte Beständigkeit gegenüber UV-Strahlung (längere Lebensdauer)

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannung und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Der Erfindung liegt die Aufgabe zugrunde, Medien insbesondere für derartige MFK-, TN- oder STN-Anzeigen bereitzustellen, die die oben angegebenen Nachteile nicht oder nur in geringerem Maße, und vorzugsweise gleichzeitig sehr hohe spezifische Widerstände und niedrige Schwellenspannungen aufweisen.

Es wurde nun gefunden, dass diese Aufgabe gelöst werden kann, wenn man in Anzeigen erfindungsgemässe Medien verwendet.

### Im Stand der Technik sind verschiedene Derivate von Verbindungen basierend auf der Formel

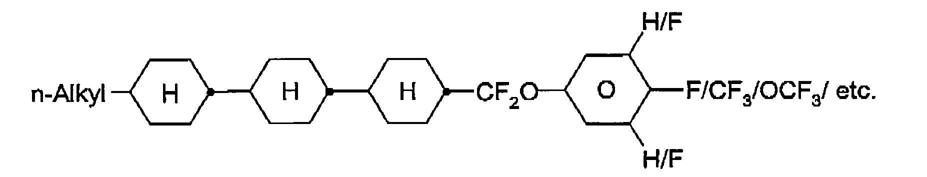

**bekannt. In der EP 1 302 523 A1, EP 1 182 186 A1, DE 101 24 480 A1 und EP 0 844 229 A1 werden Verbindungen dieser Art als optionale Komponenten für flüssigkristalline Mischungen offenbart.**

Gegenstand der Erfindung ist somit ein flüssigkristallines Medium auf der Basis eines Gemisches von polaren Verbindungen mit positiver dielektrischer Anisotropie, dadurch gekennzeichnet, dass es eine oder mehrere Verbindungen der Formel I 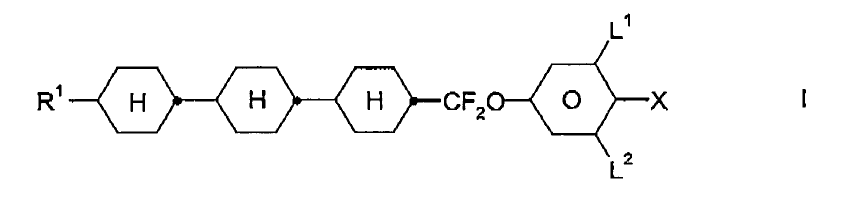 worin
- R¹: einen halogenierten oder unsubstituierten Alkyl- oder Alkoxyrest mit 1 bis 15 C-Atomen, wobei in diesen Resten auch eine oder mehrere CH₂-Gruppen jeweils unabhängig voneinander durch -C≡C-, -CH=CH-, -O-, -CO-O- oder -O-CO- so ersetzt sein können, dass O-Atome nicht direkt miteinander verknüpft sind,
- X: F, Cl, CN, SF₅, halogenierter Alkylrest, halogenierter Alkenylrest, halogenierter Alkoxyrest oder halogenierter Alkenyloxyrest mit bis zu 6 C-Atomen,
- L¹ und L²: jeweils unabhängig voneinander H oder F
bedeuten,
**und eine oder mehrere Verbindungen der Formeln** 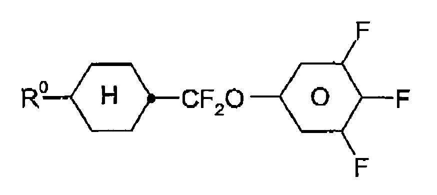 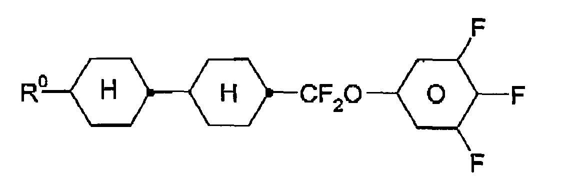 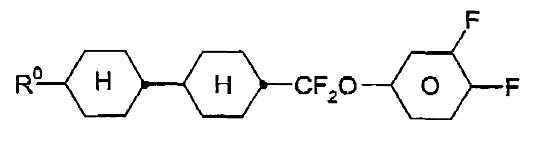 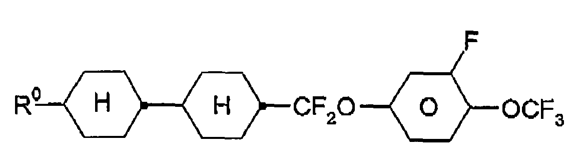 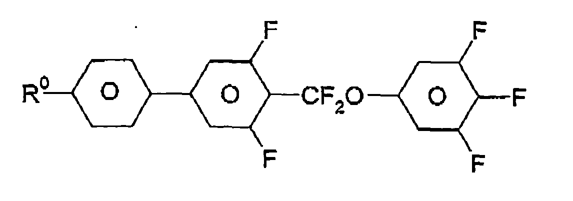 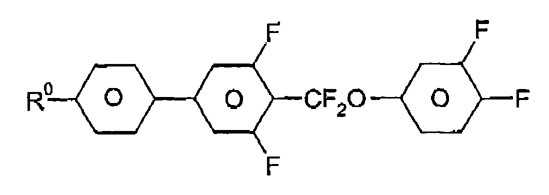 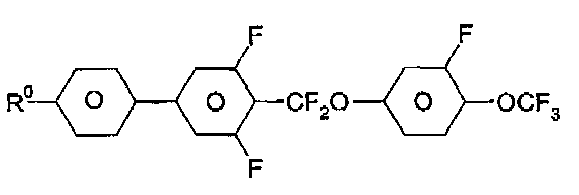 **worin**
- **R⁰**: **n-Alkyl, Oxaalkyl, Fluoralkyl oder Alkenyl mit jeweils bis zu 9 C-Atomen**
**bedeutet, enthält.**

Die Verbindungen der Formeln I besitzen einen breiten Anwendungsbereich. In Abhängigkeit von der Auswahl der Substituenten können diese Verbindungen als Basismaterialien dienen, aus denen flüssigkristalline Medien zum überwiegenden Teil zusammengesetzt sind; es können aber auch Verbindungen der Formeln I flüssigkristallinen Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren.

Die Verbindungen der Formeln I sind in reinem Zustand farblos und bilden flüssigkristalline Mesophasen in einem für die elektrooptische Verwendung günstig gelegenen Temperaturbereich. Chemisch, thermisch und gegen Licht sind sie stabil.

Falls R¹ in Formel I einen Alkylrest und/oder einen Alkoxyrest bedeutet, so kann dieser geradkettig oder verzweigt sein. Vorzugsweise ist er geradkettig, hat 2, 3, 4, 5, 6 oder 7 Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradedoxy.

Oxaalkyl bedeutet vorzugsweise geradkettiges 2-Oxapropyl (= Methoxymethyl), 2-(= Ethoxymethyl) oder 3-Oxabutyl (= 2-Methoxyethyl), 2-, 3-oder 4-Oxapentyl, 2-, 3-, 4- oder 5-Oxahexyl, 2-, 3-, 4-, 5- oder 6-Oxaheptyl, 2-, 3-, 4-, 5-, 6-, oder 7-Oxaoctyl, 2-, 3-, 4-, 5-, 6-, 7-oder 8-Oxanonyl, 2-, 3-, 4-, 5-, 6-, 7-, 8- oder 9-Oxadexyl.

Falls R¹ einen Alkylrest bedeutet, in dem eine CH₂-Gruppe durch -CH=CH-ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls R¹ einen Alkylrest bedeutet, in dem eine CH₂-Gruppe durch -O- und eine durch -CO- ersetzt ist, so sind diese bevorzugt benachbart. Somit beinhalten diese eine Acyloxygruppe -CO-O- oder eine Oxycarbonylgruppe -O-CO-. Vorzugsweise sind diese geradkettig und haben 2 bis 6 C-Atome. Sie bedeuten demnach besonders Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 2-Acetyloxypropyl, 3-Propionyl-oxypropyl, 4-Acetyl-oxybutyl, Methoxycarbonyl, Ethoxycarbonyl, Propoxy-carbonyl, Butoxycarbonyl, Pentoxycarbonyl, Methoxycarbonylmethyl, Ethoxycarbonylmethly, Propoxycarbonylmethyl, Butoxycarbonylmethyl, 2-(Methoxycarbonyl)ethyl, 2-(Ethoxycarbonyl)ethyl, 2-(Propoxycarbonyl)-ethyl, 3-(Methoxycarbonyl)-propyl, 3-(Ethoxy-carbonyl)-propyl oder 4-(Methoxycarbonyl)-butyl.

Falls R¹ einen Alkylrest bedeutet, in dem eine CH₂-Gruppe durch unsubstituiertes oder substituiertes -CH=CH- und eine benachbarte CH₂-Gruppe durch CO oder CO-O oder O-CO ersetzt ist, so kann dieser geradkettig oder verzweigt sein. Vorzugsweise ist er geradkettig und hat 4 bis 12 C-Atome. Er bedeutet demnach besonders Acryloyloxymethyl, 2-Acryloyloxyethyl, 3-Acryloyloxypropyl, 4-Acryloyloxybutyl, 5-Acryloyloxypentyl, 6-Acryloyloxyhexyl, 7-Acryloyloxyheptyl, 8-Acryloyloxyoctyl, 9-Acryloyloxynonyl, 10-Acryloyloxydecyl, Methacryloyloxymethyl, 2-Methacryloyloxyethyl, 3-Methacryloyloxypropyl, 4-Methacryloyloxybutyl, 5-Methacryloyloxypentyl, 6-Methacryloyloxyhexyl, 7-Methacryloyloxyheptyl, 8-Methacryloyloxyoctyl, 9-Methacryloyloxynonyl.

Falls R¹ einen einfach durch CN oder CF₃ substituerten Alkyl- oder Alkenylrest bedeutet, so ist dieser Rest vorzugsweise geradkettig. Die Substitution durch CN oder CF₃ ist in beliebiger Position.

Falls R¹ einen mindestens einfach durch Halogen substituierten Alkyl- oder Alkenylrest bedeutet, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

Verbindungen mit verzweigten Flügelgruppen R¹ können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verzweigte Gruppen dieser Art enthalten in der Regel nicht mehr als eine Kettenverzweigung. Bevorzugt verzweigte Reste R¹ sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy.

Falls R¹ einen Alkylrest darstellt, in dem zwei oder mehr CH₂-Gruppen durch -O- und/oder -CO-O- ersetzt sind, so kann dieser geradkettig oder verzweigt sind. Vorzugsweise ist er verzweigt und hat 3 bis 12 C-Atome. Er bedeutet demnach besonders Bis-carboxy-methyl, 2,2-Bis-carboxy-ethyl, 3,3-Bis-carboxy-propyl, 4,4-Bis-carboxy-butyl, 5,5-Bis-carboxy-pentyl, 6,6-Bis-carboxy-hexyl, 7,7-Bis-carboxy-heptyl, 8,8-Bis-carboxy-octyl, 9,9-Bis-carboxy-nonyl, 10,10-Bis-carboxy-decyl, Bis-(methoxy-carbonyl)-methyl, 2,2-Bis-(methoxycarbonyl)-ethyl, 3,3-Bis-(methoxy-carbonyl)-propyl, 4,4-Bis-(methoxycarbonyl)-butyl, 5,5-Bis-(methoxy-carbonyl)-pentyl, 6,6-Bis-(methoxycarbonyl)-hexyl, 7,7-Bis-(methoxy-carbonyl)-heptyl, 8,8-Bis-(methoxycarbonyl)-octyl, Bis-(ethoxycarbonyl)-methyl, 2,2-Bis-(ethoxycarbonyl)-ethyl, 3,3-Bis-(ethoxycarbonyl)-propyl, 4,4-Bis-(ethoxycarbonyl)-butyl, 5,5-Bis-(ethoxycarbonyl)-hexyl.

Die Verbindungen der Formeln I werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen. Die Verbindungen der Formel I können z. B. hergestellt werden, wie in den Offenlegungsschriften DE 4006921, WO 01/64667 und DE 10105314 beschrieben.

Gegenstand der Erfindung sind auch elektrooptische Anzeigen (insbesondere STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Viskosität bei tiefer Temperatur, thermischer und UV-Stabilität und dielektrischer Anisotropie übertreffen bei weitem bisherige Materialien aus dem Stand der Technik.

Die Forderung nach hohem Klärpunkt, nematischer Phase bei tiefer Temperatur sowie einem hohen Δε konnte bislang nur unzureichend erfüllt werden. Systeme wie z.B. ZLI-3119 weisen zwar vergleichbaren Klärpunkt und vergleichbar günstige Viskositäten auf, besitzen jedoch ein Δε von nur +3. Andere Mischungssysteme besitzen vergleichbare Viskositäten und Werte von Δε, weisen jedoch nur Klärpunkte in der Gegend von 60 °C auf.

Die erfindungsgemäßen Flüssigkristallmischungen ermöglichen es bei Beibehaltung der nematischen Phase bis -20 °C und bevorzugt bis -30 °C, besonders bevorzugt bis -40 °C, Klärpunkt oberhalb 60 °C, vorzugsweise oberhalb 65 °C, besonders bevorzugt oberhalb 70 °C, gleichzeitig dielektrische Anisotropiewerte Δε ≥ 6, vorzugsweise ≥ 8 und einen hohen Wert für den spezifischen Widerstand zu erreichen, wodurch hervorragende STN- und MKF-Anzeigen erzielt werden können. Insbesondere sind die Mischungen durch kleine Operationsspannungen gekennzeichnet. Die TN-Schwellen liegen unterhalb 2,0 V, vorzugsweise unterhalb 1,7 V, besonders bevorzugt < 1,3 V.

Es versteht sich, dass durch geeignete Wahl der Komponenten der erfindungsgemäßen Mischungen auch höhere Klärpunkte (z.B. oberhalb 110 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften, wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Die Fließviskosität ν₂₀ bei 20 °C ist vorzugsweise < 60 mm²·s⁻¹, besonders bevorzugt < 50 mm²·s⁻¹. Die Rotationsviskosität γ₁ der erfindungsgemäßen Mischungen bei 20 °C ist vorzugsweise < 160 mPa·s, besonders bevorzugt < 150 mPa·s. Der nematische Phasenbereich ist vorzugsweise mindestens 90°, insbesondere mindestens 100°. Vorzugsweise erstreckt sich dieser Bereich mindestens von -20° bis +80°.

Bei Flüssigkristallanzeigen ist eine kleine Schaltzeit erwünscht. Dies gilt besonders für Anzeigen die Videowiedergabe-fähig sind. Für derartige Anzeigen werden Schaltzeiten (Summe: tₒₙ + t_{off}) von maximal 25 ms benötigt. Die Obergrenze der Schaltzeit wird durch die Bildwiederholfrequenz bestimmt. Neben der Rotationsviskosität γ₁ beeinflußt auch der Tiltwinkel die Schaltzeit. Insbesondere Mischungen mit ≥ 20 % der Verbindungen der Formel I zeigen einen Tiltanstellwinkel von > 2,5, vorzugsweise > 3,0 im Vergleich zu dem Verkaufsprodukt ZLI-4792 der Fa. Merck KGaA.

Messungen des "Voltage Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend Verbindungen der Formel I eine deutlich kleinere Abnahme des HR mit steigender Temperatur aufweisen als analoge Mischungen enthaltend anstelle den Verbindungen der Formel I Cyanophenylcyclohexane der Formel 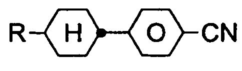 oder Ester der Formel

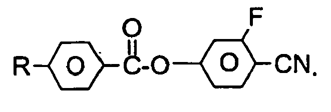

Auch die UV-Stabilität der erfindungsgemäßen Mischungen ist erheblich besser, d.h. sie zeigen eine deutlich kleinere Abnahme des HR unter UV-Belastung.

Besonders bevorzugte Verbindungen der Formel I sind Verbindungen der Formeln I-1 bis I-9: 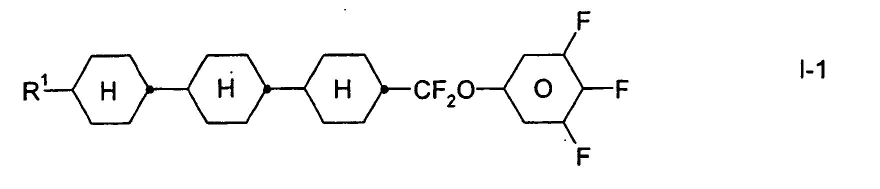 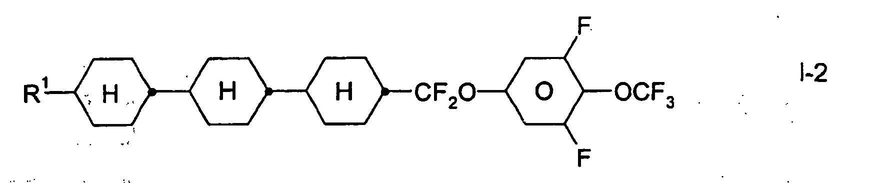 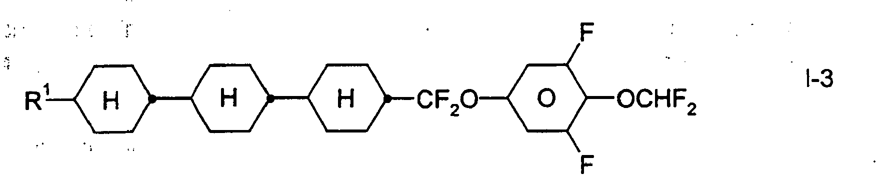 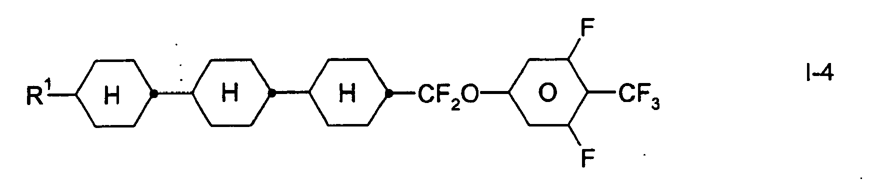 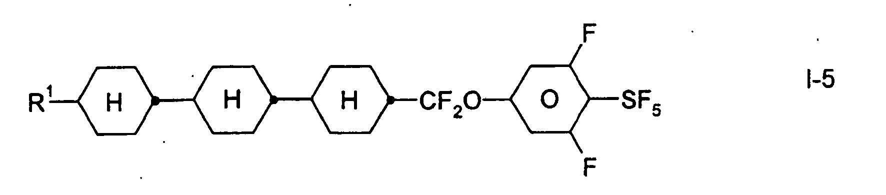 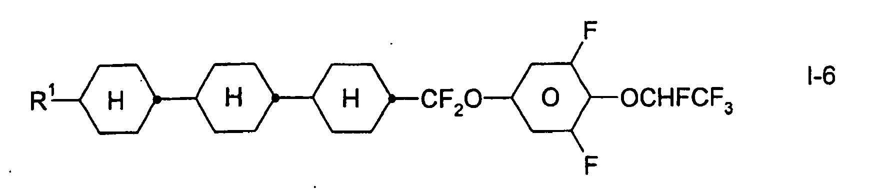 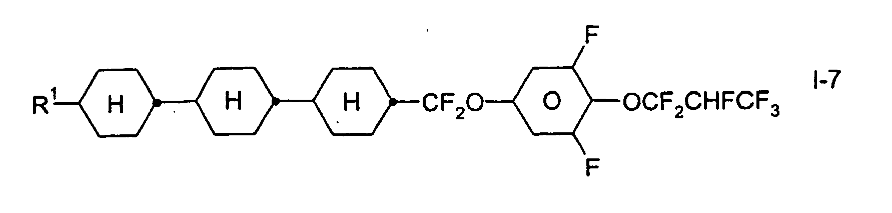 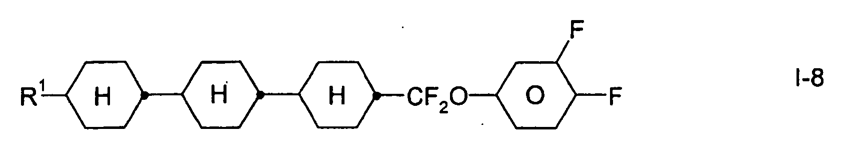 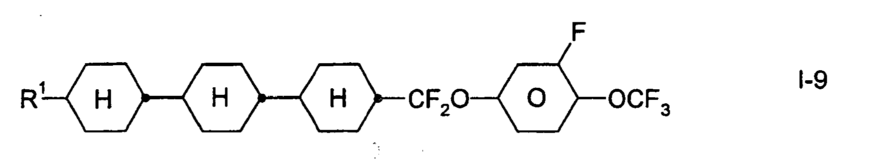 worin R¹ die in Formel I angegebene Bedeutung hat.

Von diesen bevorzugten Verbindungen sind besonders bevorzugt solche der Formeln I-1, I-2, I-3 und I-4, insbesondere die der Formeln I-1 und 1-2.

Bevorzugte Ausführungsformen sind im folgenden angegeben:
- Das Medium enthält ein, zwei oder mehr Verbindungen der Formeln I-1 bis I-9;
- Das Medium enthält zusätzlich eine oder mehrere Verbindungen ausgewählt aus der Gruppe bestehend aus den allgemeinen Formeln II bis VI: 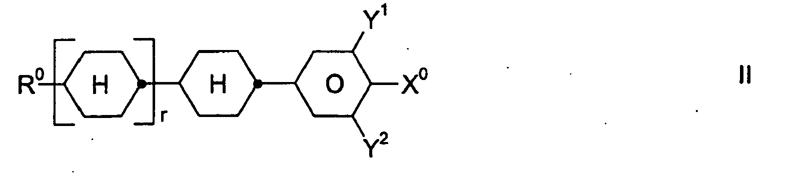 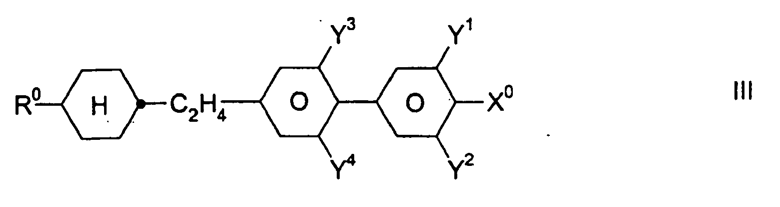 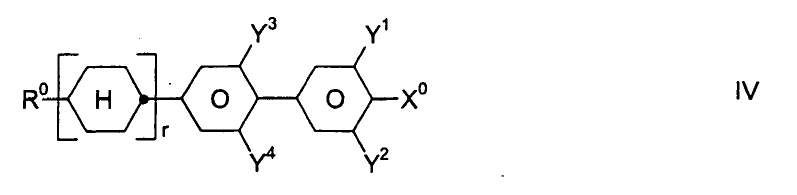 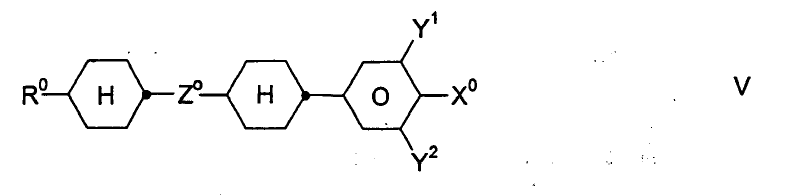 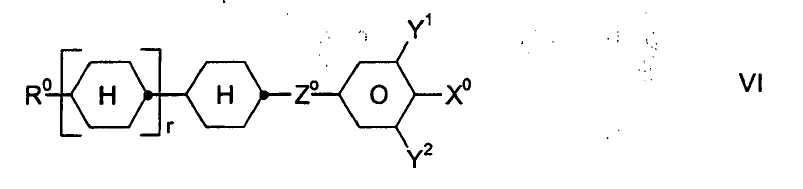
worin die einzelnen Reste die folgenden Bedeutungen haben:
- R⁰: n-Alkyl, Oxaalkyl, Fluoralkyl oder Alkenyl mit jeweils bis zu 9 C-Atomen,
- X⁰: F, Cl, halogeniertes Alkyl, halogeniertes Alkenyl, halogeniertes Alkenyloxy oder halogeniertes Alkoxy mit bis zu 6 C-Atomen,
- Z⁰: -C₂F₄-, -CF=CF-, -C₂H₄-, -(CH₂)₄-, -OCH₂-, -CH₂O-, -CF₂O- oder -OCF₂-,
- Y¹ bis Y⁴: jeweils unabhängig voneinander H oder F,
- r: 0 oder 1.

Die Verbindung der Formel IV ist vorzugsweise 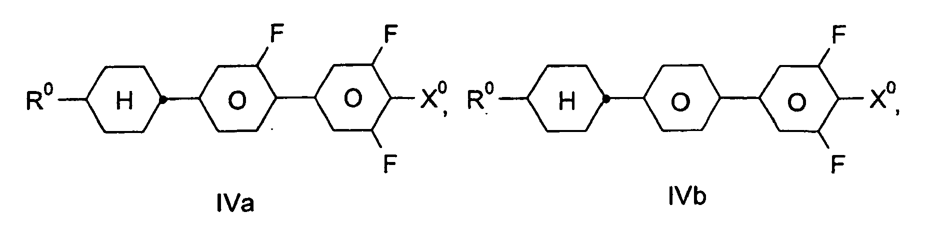 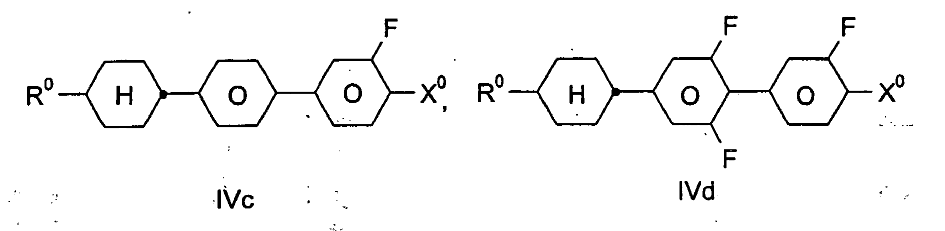 oder 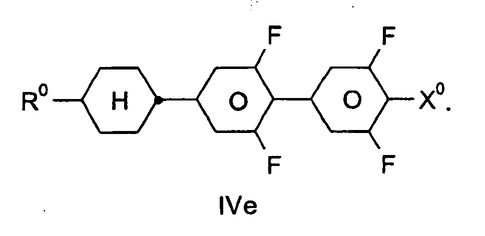
- Das Medium enthält zusätzlich eine oder mehrere Verbindungen ausgewählt aus der Gruppe bestehend aus den allgemeinen Formeln VII bis XIII: 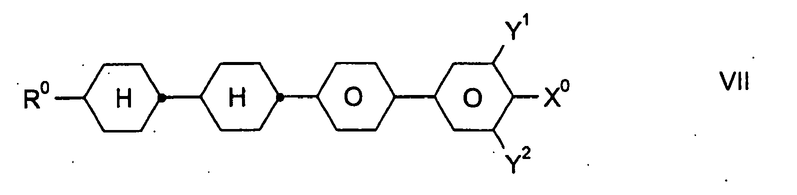 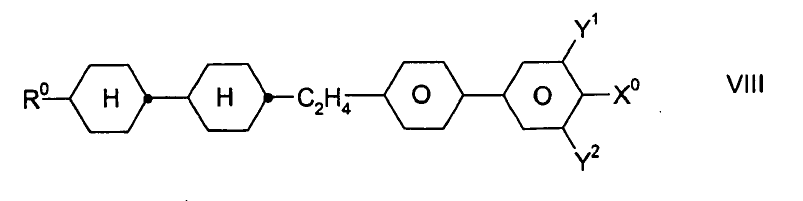 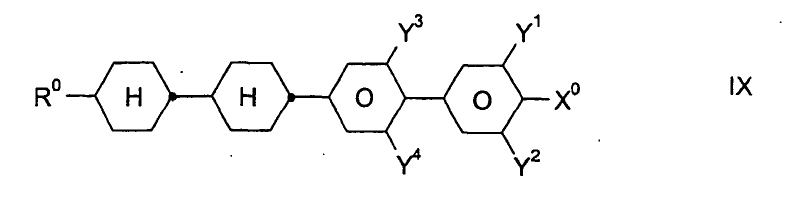 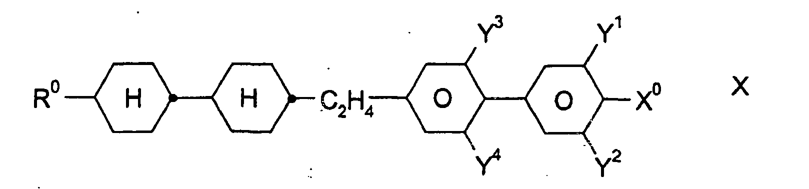 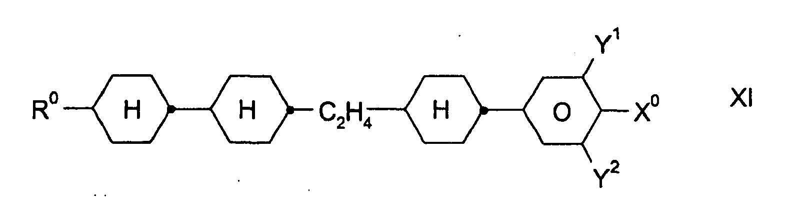 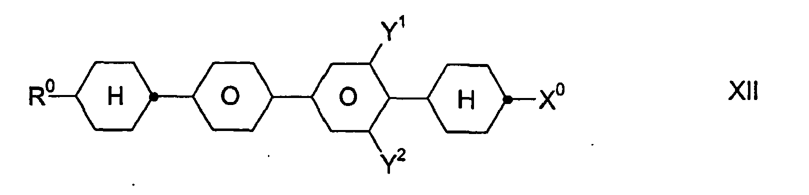 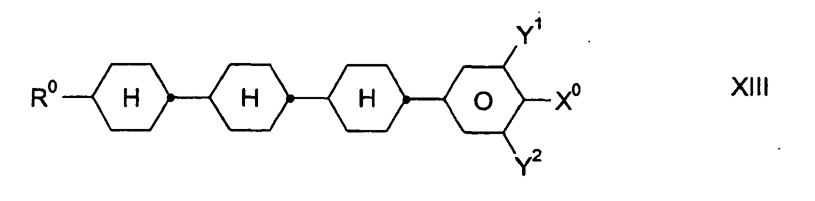
worin R⁰, X⁰ und Y¹⁻⁴ jeweils unabhängig voneinander eine der in Anspruch 3 angegebenen Bedeutungen haben. X⁰ ist vorzugsweise F, Cl, CF₃, OCF₃ oder OCHF₂. R⁰ bedeutet vorzugsweise Alkyl, Oxaalkyl, Fluoralkyl oder Alkenyl mit jeweils bis zu 6 C-Atomen.

- Das Medium enthält zusätzlich eine oder mehrere Verbindungen der Formeln E-a bis E-d 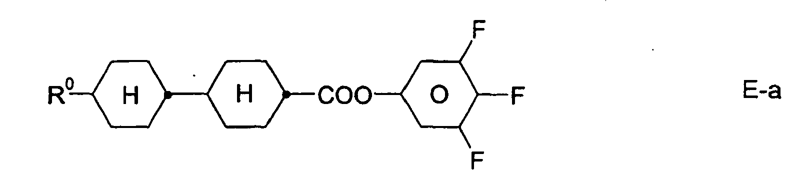 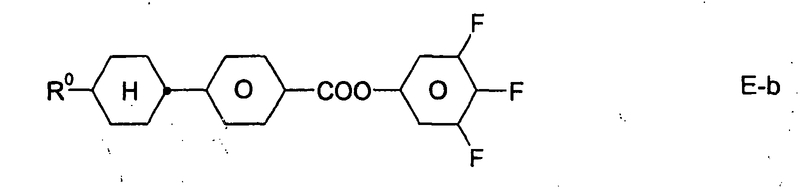 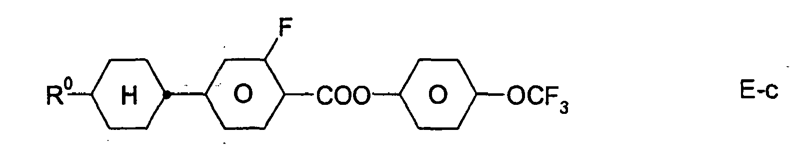 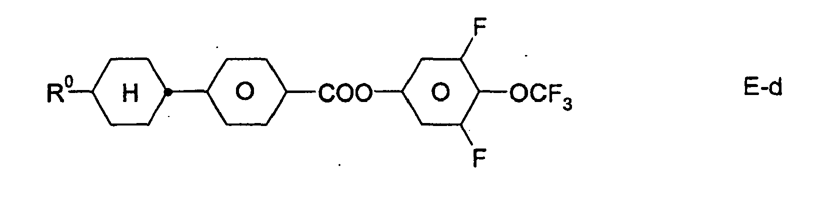 worin R⁰ die in Anspruch 3 angegebenen Bedeutungen hat;
- Der Anteil der Verbindungen der Formeln Ea bis Ed ist vorzugsweise 10-30 Gew.%, insbesondere 15-25 Gew.%;
- Der Anteil an Verbindungen der Formeln I bis VI zusammen beträgt im Gesamtgemisch mindestens 50 Gew.%;
- Der Anteil an Verbindungen der Formel I beträgt im Gesamtgemisch 0,5 bis 40, besonders bevorzugt 1 bis 30 Gew.%;
- Der Anteil an Verbindungen der Formeln II bis VI im Gesamtgemisch beträgt 30 bis 80 Gew.%; 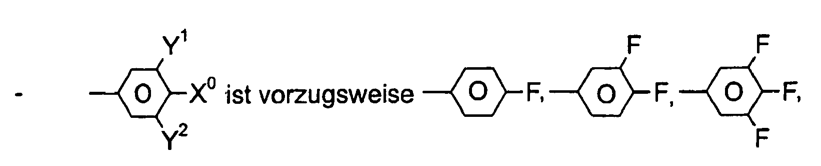 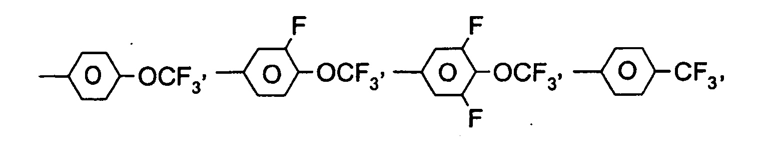 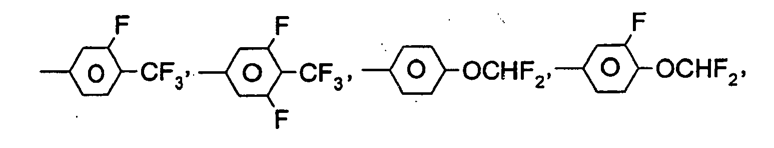 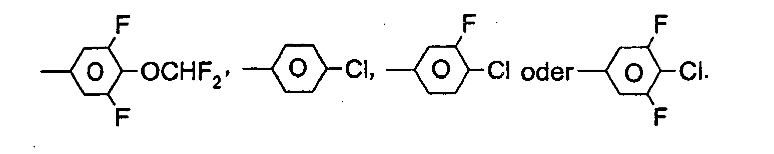
- Das Medium enthält Verbindungen der Formeln II, III, IV, V und/oder VI;
- R⁰ ist geradkettiges Alkyl oder Alkenyl mit 2 bis 7 C-Atomen;
- Das Medium besteht im wesentlichen aus Verbindungen der Formeln I bis VI und XIII;
- Das Medium enthält weitere Verbindungen, vorzugsweise ausgewählt aus der folgenden Gruppe bestehend aus den allgemeinen Formeln XIV bis XVIII: 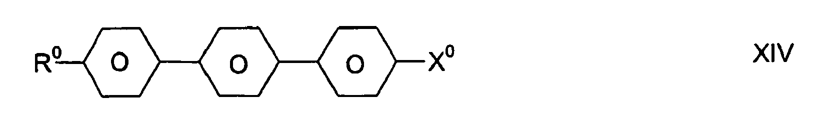 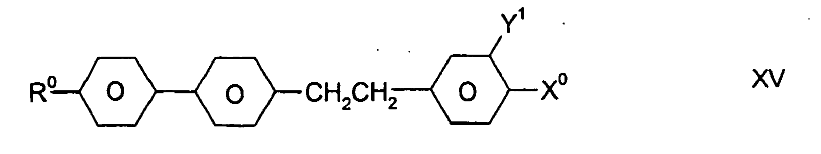 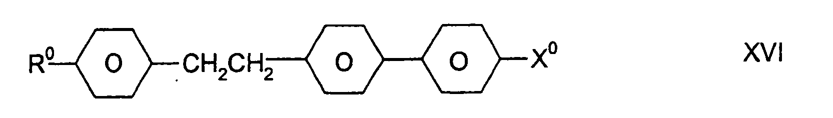 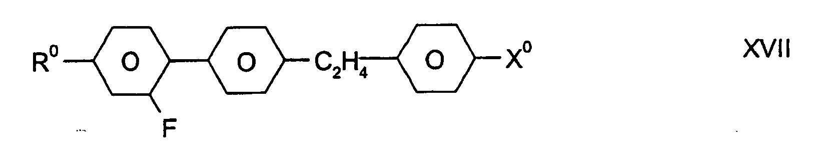 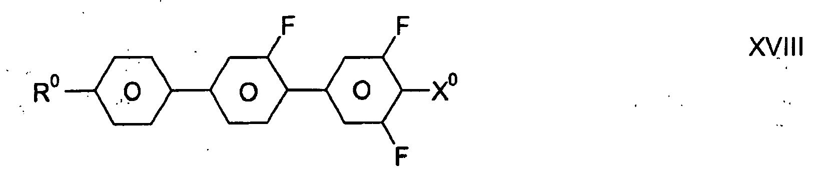 worin R⁰ und X⁰ die oben angegebenen Bedeutungen haben. Die 1,4-Phenylenringe können zusätzlich durch CN, Chlor oder Fluor substituiert sein. Vorzugsweise sind die 1,4-Phenylenringe ein- oder mehrfach durch Fluoratome substituiert.
- Das Medium enthält zusätzlich ein, zwei, drei oder mehr, vorzugsweise zwei oder drei Verbindungen der Formeln 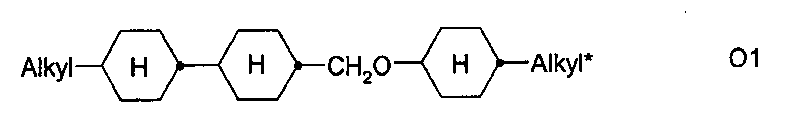 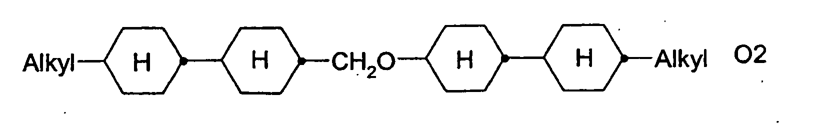 worin "Alkyl" und "Alkyl*" die nachfolgend angegebene Bedeutung haben. Der Anteil der Verbindungen der Formeln O1 und/oder O2 in den erfindungsgemäßen Mischungen beträgt vorzugsweise 5-10 Gew.%.
- Das Medium enthält vorzugsweise 5-35 Gew.% der Verbindung IVa.
- Das Medium enthält vorzugsweise ein, zwei oder drei Verbindungen der Formel IVa, worin X⁰ F oder OCF₃ bedeutet.
- Das Medium enthält vorzugsweise ein oder mehrere Verbindungen der Formeln lla bis IIg, 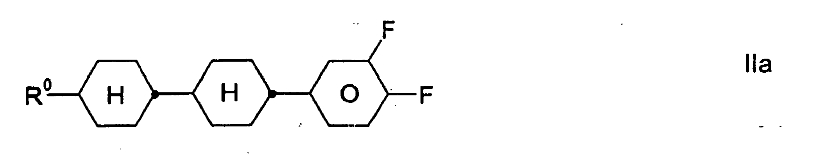 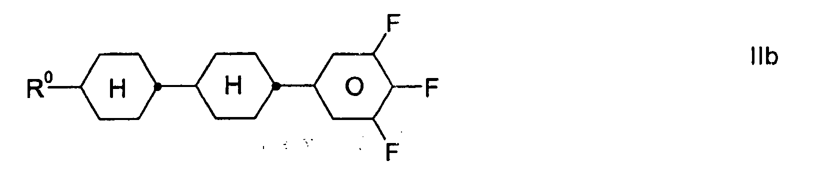 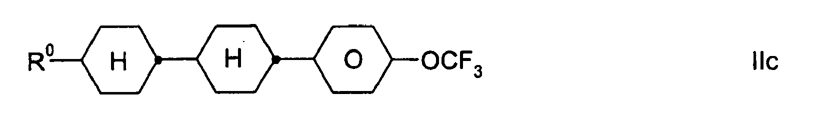 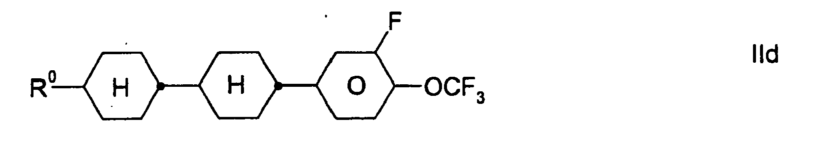 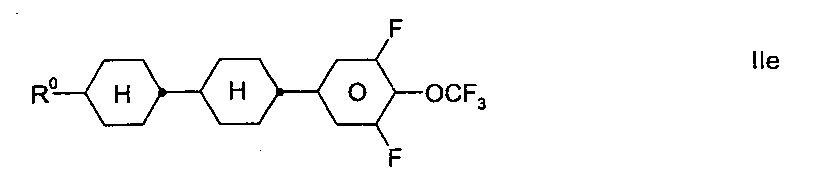 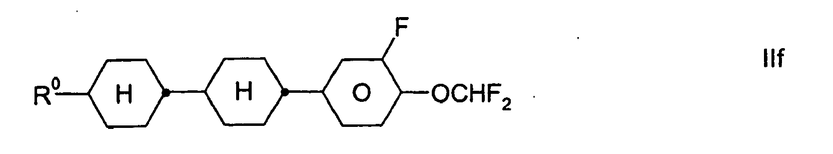 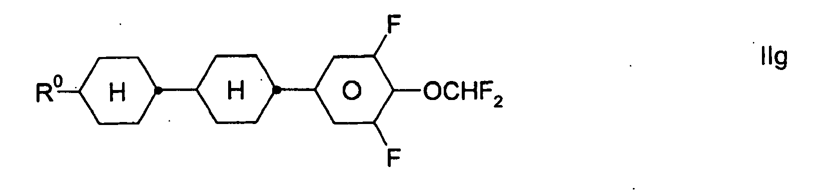 worin R⁰ die oben angegebenen Bedeutungen hat. In den Verbindungen der Formeln IIa-IIg bedeutet R⁰ vorzugsweise Methyl, Ethyl, n-Propyl, n-Butyl und n-Pentyl.
- Das Medium enthält vorzugsweise ein oder mehrere Verbindungen der Formeln 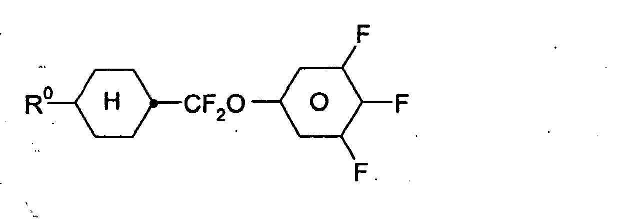 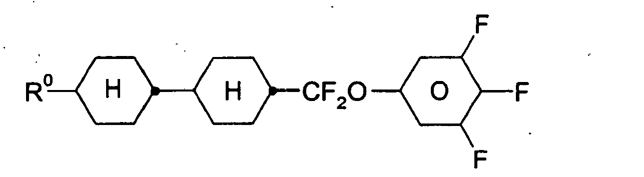 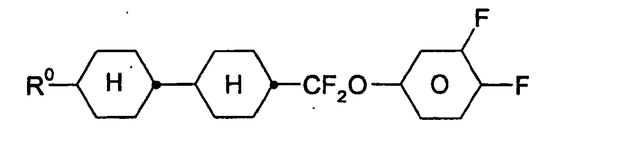 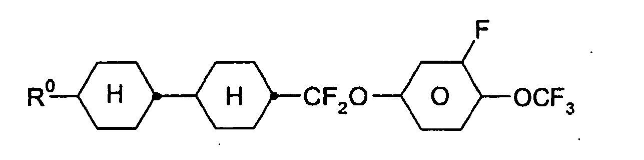 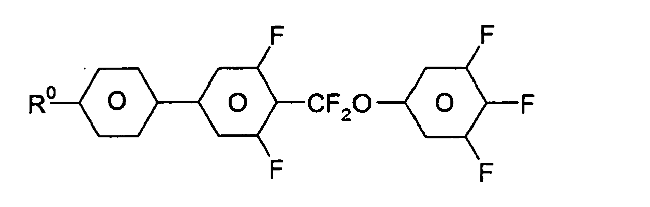 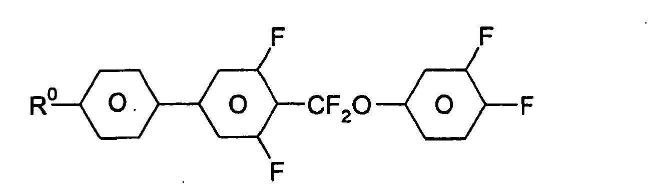 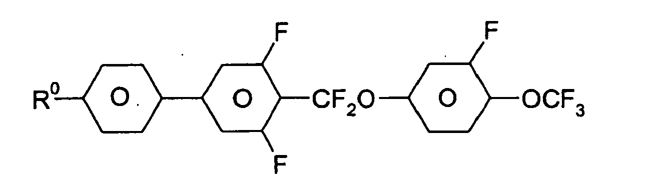 worin R⁰ die oben angegebenen Verbindungen hat.
- Das Gewichtsverhältnis (I): (II + III + IV + V + VI) ist vorzugsweise 1 : 10 bis 10 : 1.
- Das Medium besteht im wesentlichen aus Verbindungen ausgewählt aus der Gruppe bestehend aus den allgemeinen Formeln I bis XIII.
- Der Anteil der Verbindungen der Formel IVb und/oder IVc, worin X⁰ Fluor und R⁰ CH₃, C₂H₅, n-C₃H₇, n-C₄H₉ oder n-C₅H₁₁ bedeutet, beträgt im Gesamtgemisch 2 bis 20 Gew.%, insbesondere 2 bis 15 Gew.%;
- Das Medium enthält vorzugsweise Verbindungen der Formeln II bis VI, worin R⁰ Methyl bedeutet.

Insbesondere bevorzugt enthält das Medium Verbindungen der Formeln 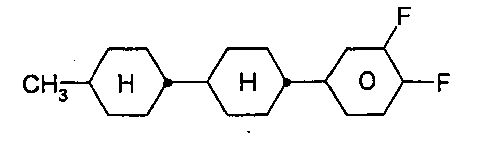 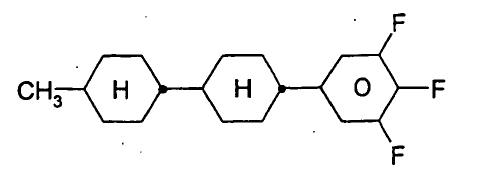 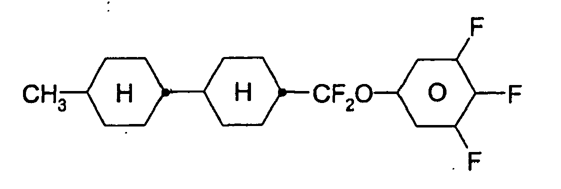 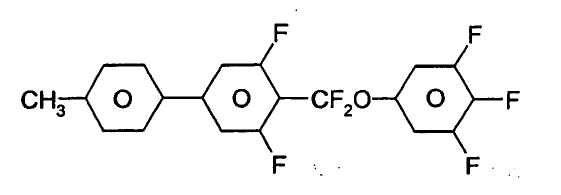
- Das Medium enthält vorzugsweise ein, zwei oder mehr, vorzugsweise ein oder zwei Dioxon-Verbindungen der Formeln 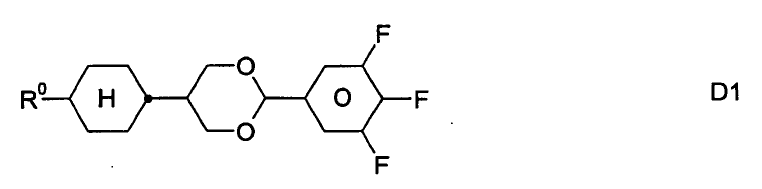 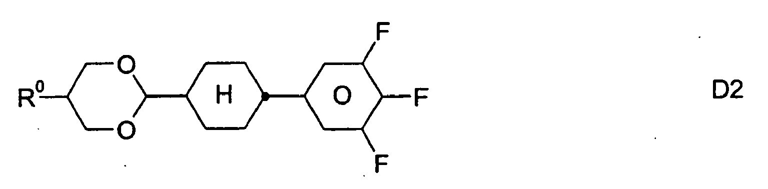
- Das Medium enthält zusätzlich ein, zwei oder mehr Zweikem-Verbindungen der Formeln Z1 bis Z6 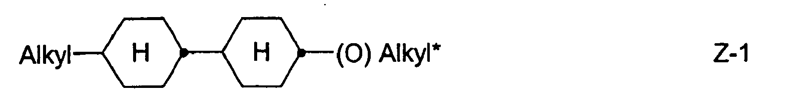 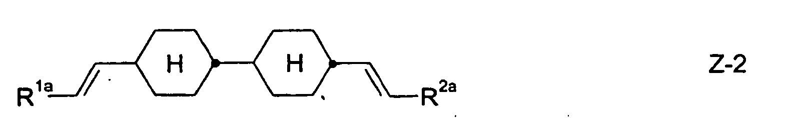 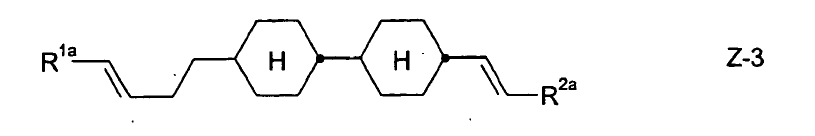 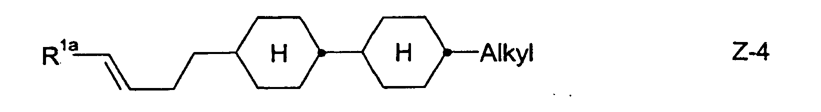 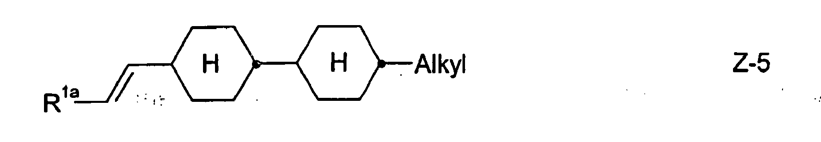 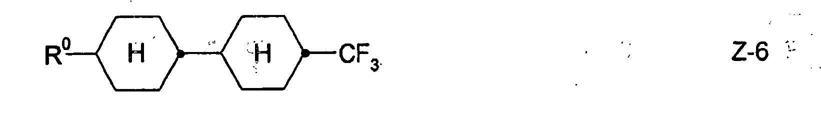
worin R^{1a} und R^{2a} jeweils unabhängig voneinander H, CH₃, C₂H₅ oder n-C₃H₇ bedeuten. R⁰, Alkyl und Alkyl* besitzen die in Anspruch 3 bzw. nachfolgend angegebenen Bedeutungen.

Von den genannten Zweikern-Verbindungen sind besonders bevorzugt die Verbindungen Z-1, Z-2, Z-5 und Z-6.
- Das Medium enthält zusätzlich ein, zwei oder mehr Verbindungen mit annellierten Ringen der Formeln AN1 bis AN11: 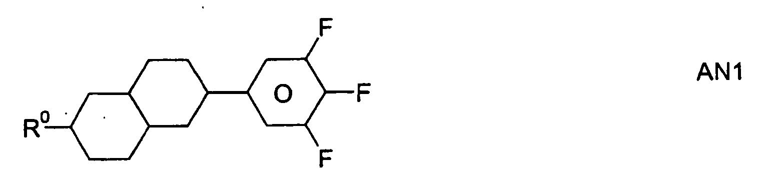 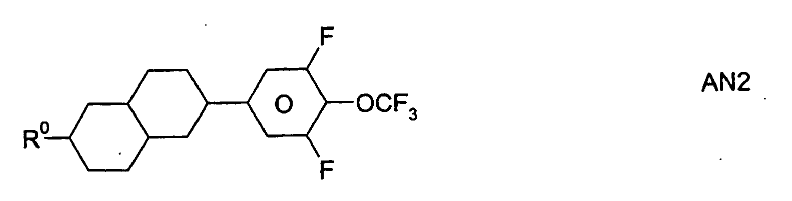 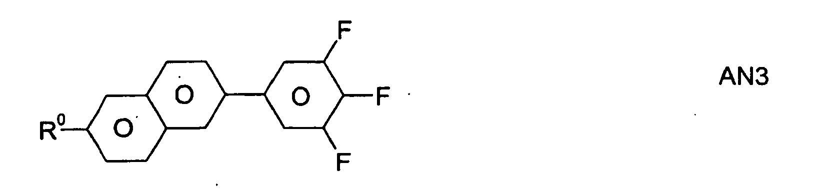 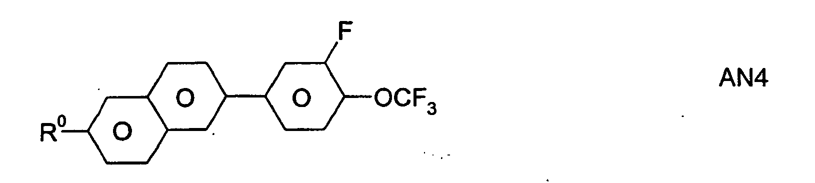 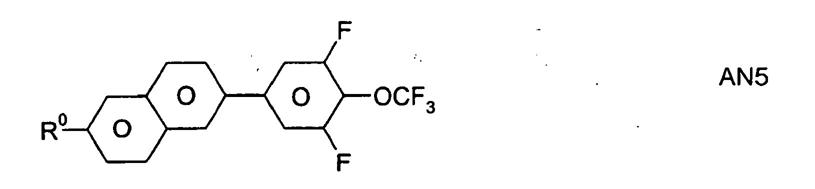 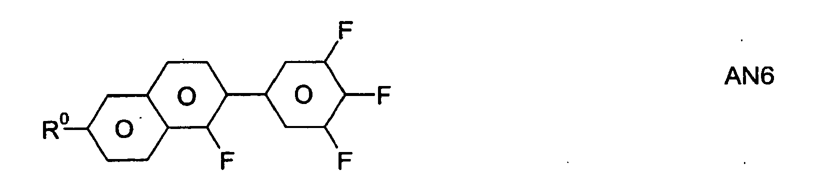 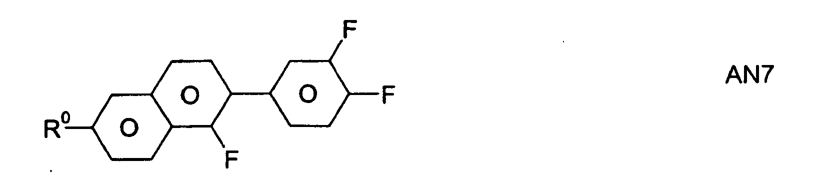 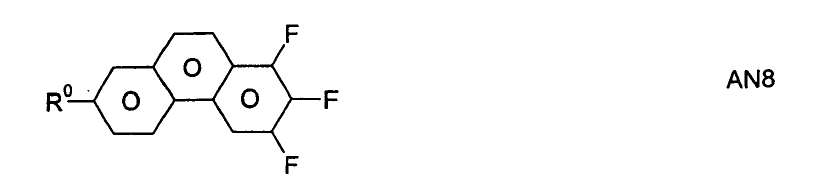 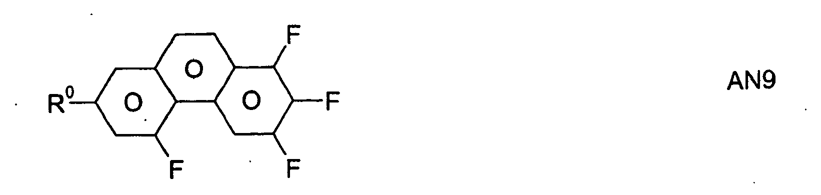 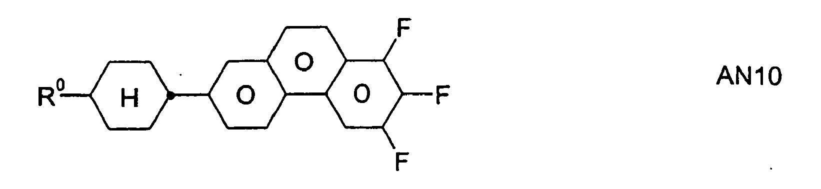 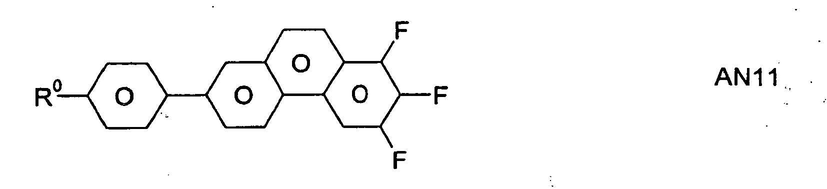
worin R⁰ die oben angegebenen Bedeutungen hat;

Es wurde gefunden, dass bereits ein relativ geringer Anteil an Verbindungen der Formeln I im Gemisch mit üblichen Flüssigkristallmaterialien, insbesondere jedoch mit einer oder mehreren Verbindungen der Formeln II, III, IV, V und/oder VI zu einer beträchtlichen Erniedrigung der Schwellenspannung und zu niedrigen Werten für die Doppelbrechung führt, wobei gleichzeitig breite nematische Phasen mit tiefen Übergangstemperaturen smektisch-nematisch beobachtet werden, wodurch die Lagerstabilität verbessert wird. Bevorzugt sind insbesondere Mischungen, die neben ein oder mehreren Verbindungen der Formeln I ein oder mehrere Verbindungen der Formel IV enthalten, insbesondere Verbindungen der Formel IVa, worin X⁰ F oder OCF₃ bedeutet. Die Verbindungen der Formeln I bis VI sind farblos, stabil und untereinander und mit anderen Flüssigkristallmaterialien gut mischbar.

Der Ausdruck "Alkyl" bzw. "Alkyl*" umfasst geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 1-5 Kohlenstoffatomen sind im allgemeinen bevorzugt.

Der Ausdruck "Alkenyl" umfasst geradkettige und verzweigte Alkenylgruppen mit 2-7 Kohlenstoffatomen, insbesondere die geradkettigen Gruppen. Bevorzugte Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele besonders bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfasst vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m 1 bis 6.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃k₁₁ im Vergleich zu Alkyl- und Alkoxyresten.

Eine -CH₂CH₂-Gruppe führt im allgemeinen zu höheren Werten von k₃₃/k₁₁ im Vergleich zu einer einfachen Kovalenzbindung. Höhere Werte von k₃₃/k₁₁ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I und II + III + IV + V + VI hängt weitgehend von den gewünschten Eigenschaften, von der Wahl der Komponenten der Formeln I, II, III, IV, V und/oder VI und der Wahl weiterer gegebenenfalls vorhandener Komponenten ab.

Geeignete Mengenverhältnisse innerhalb des oben angegebenen Bereichs können von Fall zu Fall leicht ermittelt werden.

Die Gesamtmenge an Verbindungen der Formeln I bis XIII in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln I bis XIII sind.

In einer besonders bevorzugten Ausführungsform enthalten die erfindungsgemäßen Medien Verbindungen der Formel II bis VI (vorzugsweise II, III und/oder IV, insbesondere IVa), worin X⁰ F, OCF₃, OCHF₂, OCH=CF₂, OCF=CF₂ oder OCF₂-CF₂H bedeutet. Eine günstige synergistische Wirkung mit den Verbindungen der Formeln I führt zu besonders vorteilhaften Eigenschaften. Insbesondere Mischungen enthaltend Verbindungen der Formel I zeichnen sich durch ihre niedrige Schwellenspannung aus.

Die einzelnen Verbindungen der Formeln I bis XVIII und deren Unterformeln, die in den erfindungsgemäßen Medien verwendet werden können, sind entweder bekannt, oder sie können analog zu den bekannten Verbindungen hergestellt werden.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

C bedeutet eine kristalline, S eine smektische, S_{c} eine smektisch C, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2,0fachen Wert von V₁₀. Δn bezeichnet die optische Anisotropie. Δε bezeichnet die dielektrische Anisotropie (Δε = ε_{∥} - ε_{⊥}, wobei ε_{∥} die Dielektrizitätskonstante parallel zu den Moleküllängsachsen und ε_{⊥} die Dielektrizitätskonstante senkrecht dazu bedeutet). Die elektro-optischen Daten werden in einer TN-Zelle im 1. Minimum (d.h. bei einem d · Δn-Wert von 0,5 µm) bei 20 °C gemessen, sofern nicht ausdrücklich etwas anderes angegeben wird. Die optischen Daten werden bei 20 °C gemessen, sofern nicht ausdrücklich etwas anderes angegeben wird.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n und m sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Acronym für den Grundkörper angegeben. Im Einzelfall folgt getrennt von Acronym für den Grundkörper mit einem Strick ein Code für die Substituenten R^{1*}, R^{2*}, L^{1*} und L^{2*}:

| Code für R^{1*}, R^{2*}, L^{1*}, L^{2*}, L^{3*} | R^{1*} | R^{2*} | L^{1*} | L^{2*} |
|---|---|---|---|---|
| nm | CₙH₂ₙ₊₁ | CₘH₂ₘ₊₁ | H | H |
| nOm | OCₙH₂ₙ₊₁ | CₘH₂ₘ₊₁ | H | H |
| nO.m | CₙH₂ₙ₊₁ | OCₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCl | CₙH₂ₙ₊₁ | Cl | H | H |
| nOF | OCₙH₂ₙ₊₁ | F | H | H |
| nF.F | CₙH₂ₙ₊₁ | F | F | H |
| nF.F.F | CₙH₂ₙ₊₁ | F | F | F |
| nmF | CₙH₂ₙ₊₁ | CₘH₂ₘ₊₁ | F | H |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Bevorzugte Mischungskomponenten finden sich in den Tabellen A und B.

**Tabelle A**

| |
|---|
| 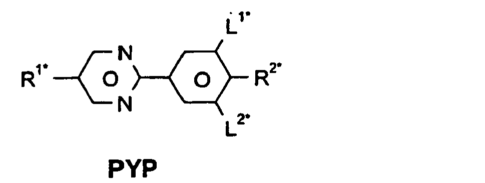 |
| 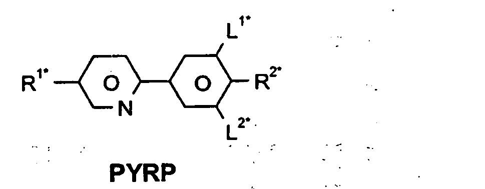 |
| 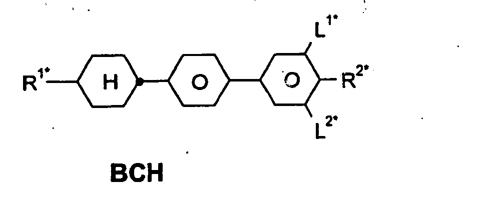 |
| 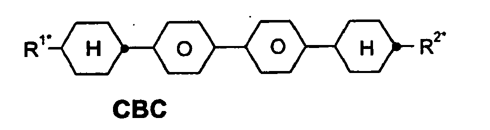 |
| 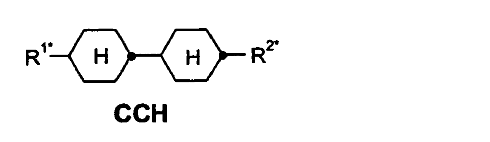 |
| 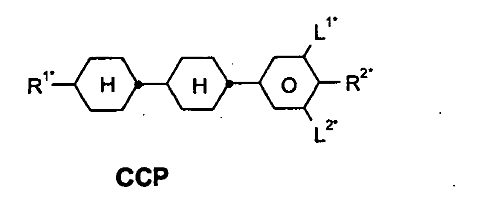 |
| 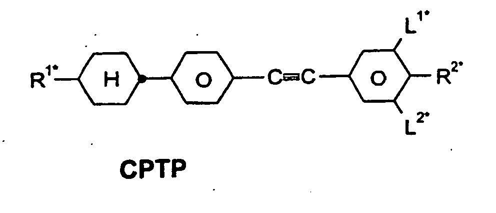 |
| 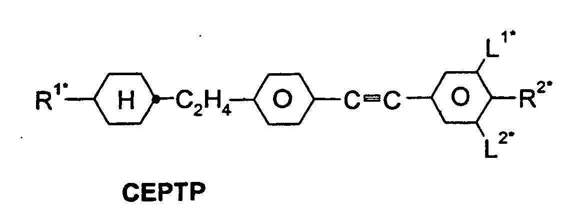 |
| 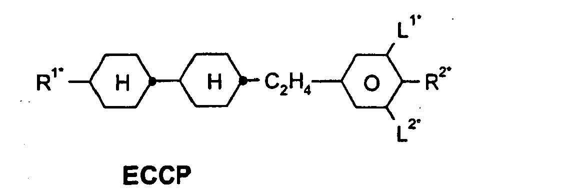 |
| 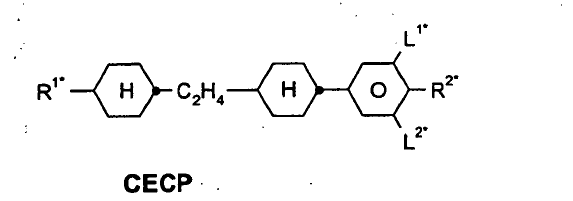 |
| 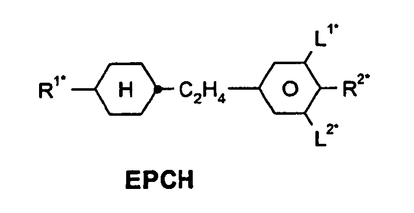 |
| 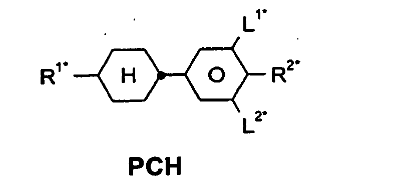 |
| 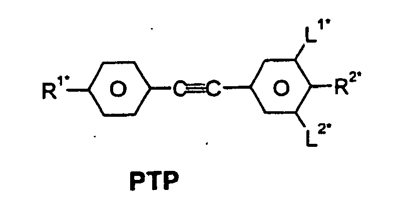 |
| 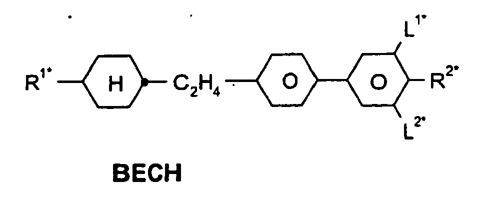 |
| 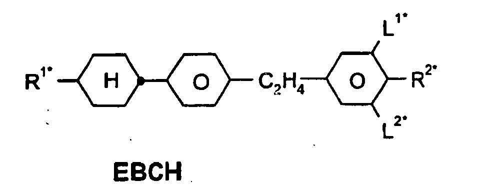 |
| 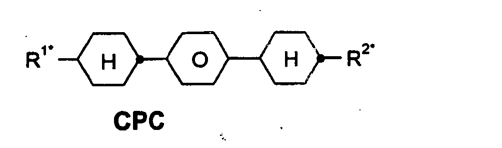 |
| 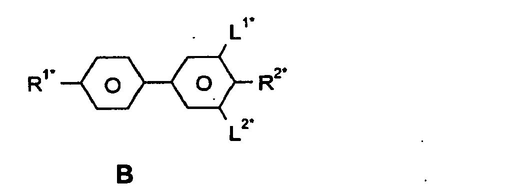 |
| 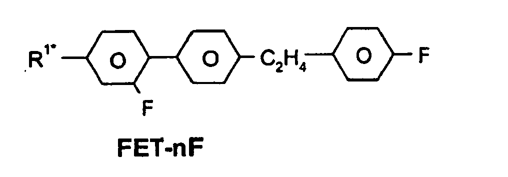 |
| 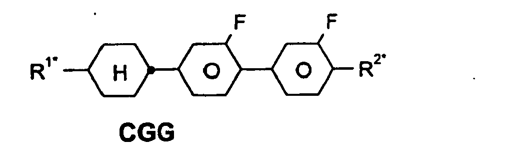 |
| 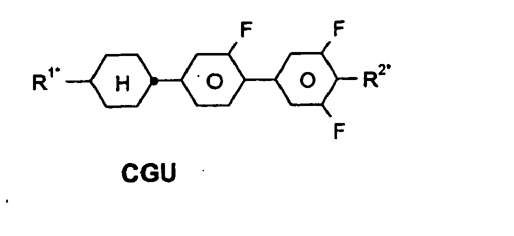 |
| 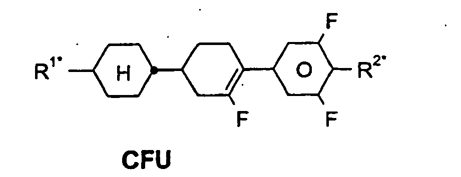 |

**Tabelle B**

| |
|---|
| 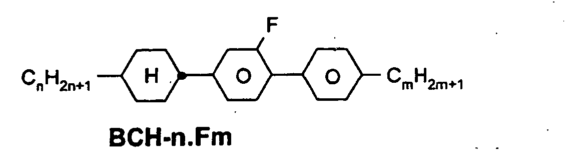 |
| 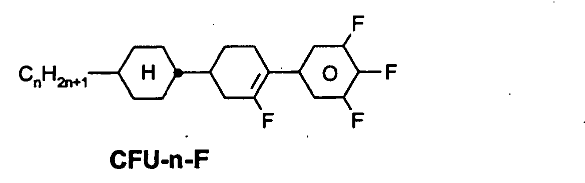 |
| 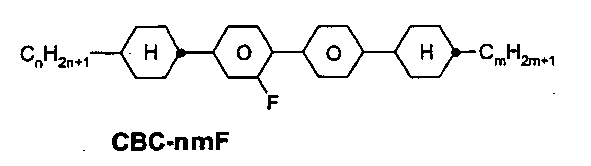 |
| 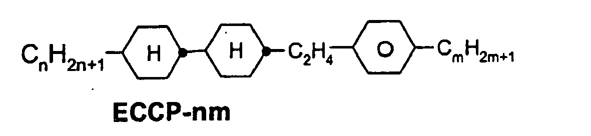 |
| 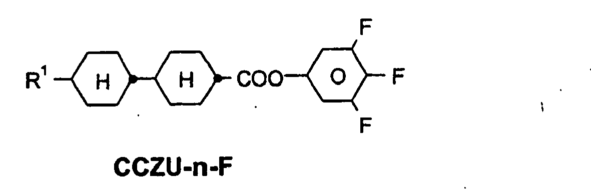 |
| 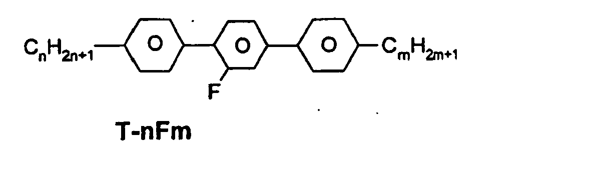 |
| 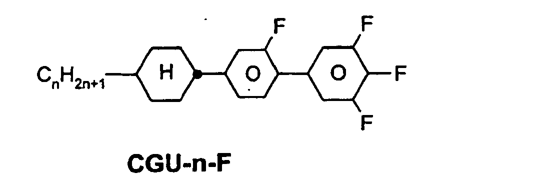 |
| 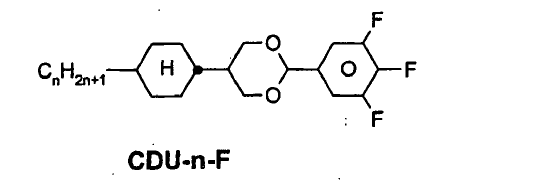 |
| 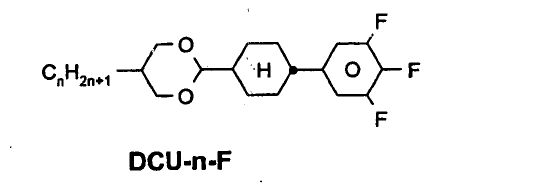 |
| 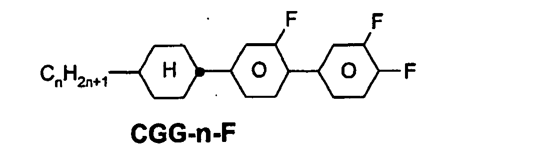 |
| 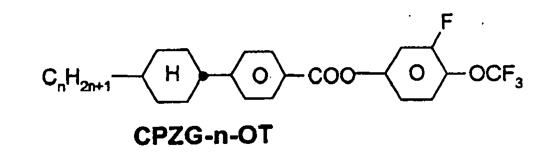 |
| 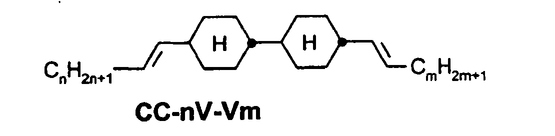 |
| 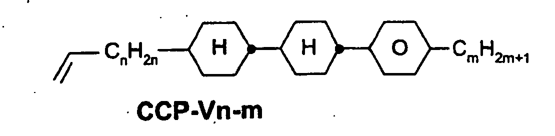 |
| 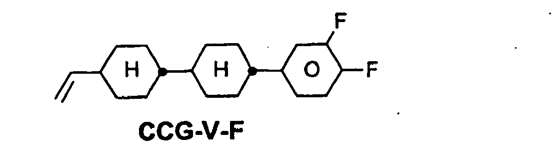 |
| 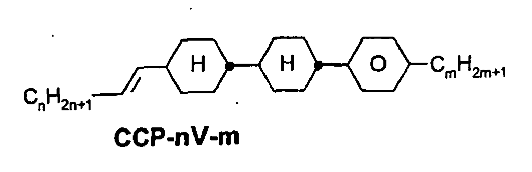 |
| 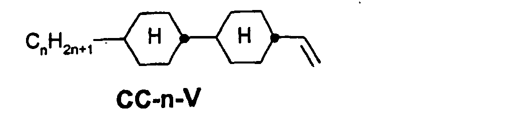 |
| 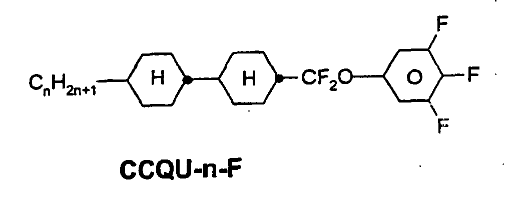 |
| 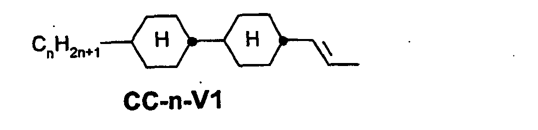 |
| 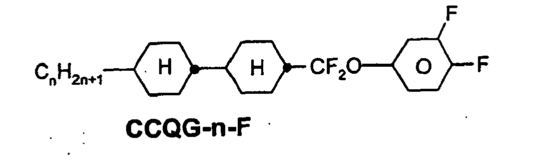 |
| 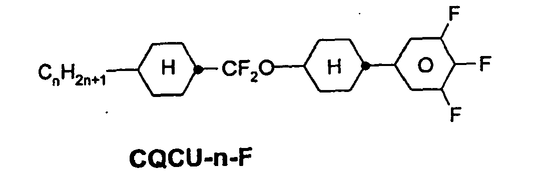 |
| 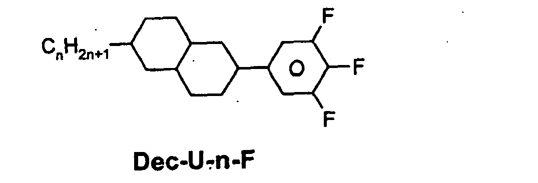 |
| 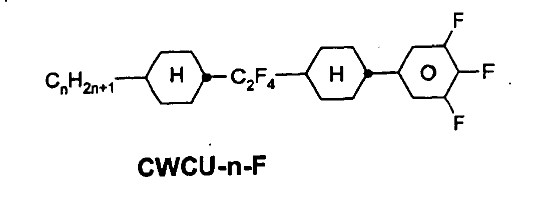 |
| 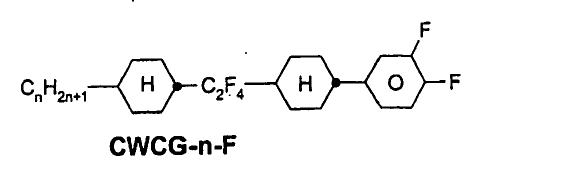 |
| 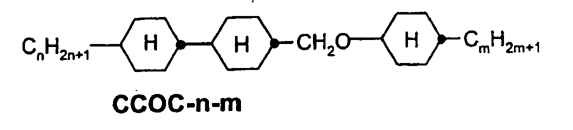 |
| 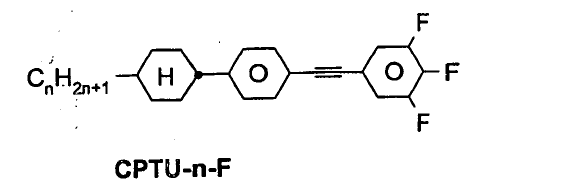 |
| 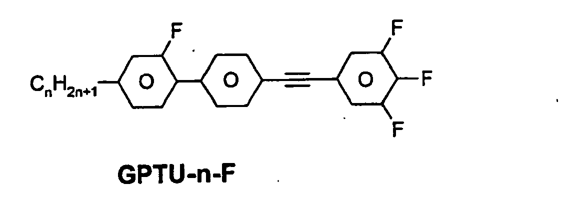 |
| 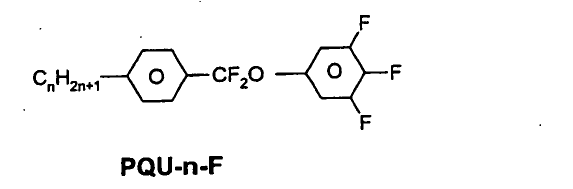 |
| 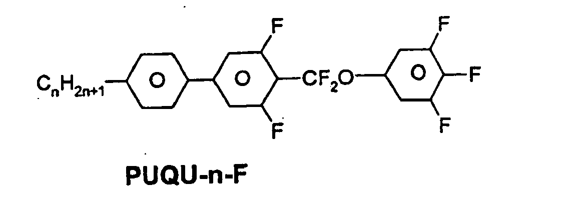 |
| 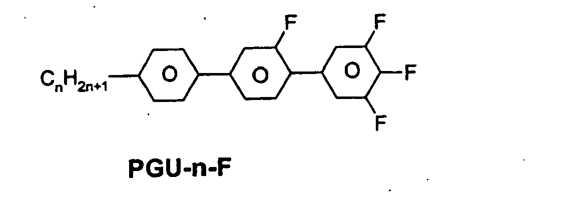 |
| 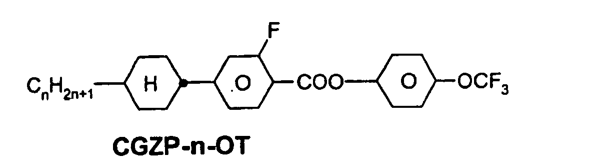 |
| 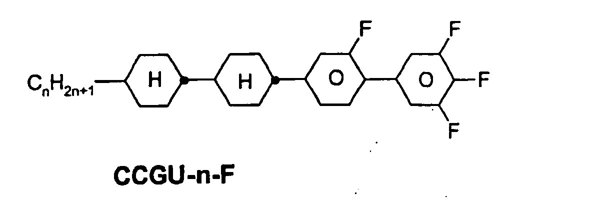 |
| 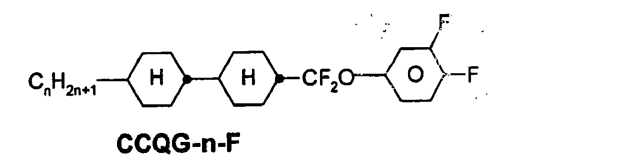 |
| 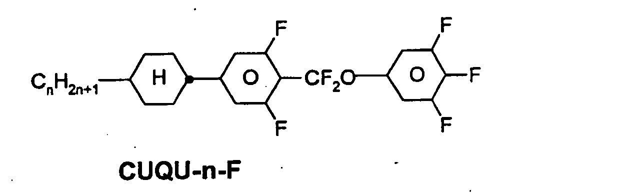 |
| 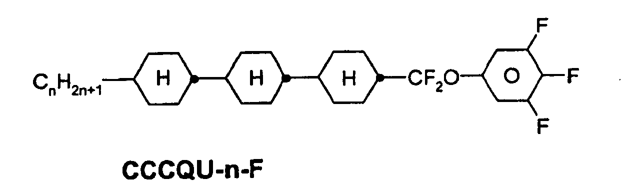 |

Besonders bevorzugt sind flüsigkristalline Mischungen, die neben den Verbindungen der Formeln I mindestens ein, zwei, drei oder vier Verbindungen aus der Tabelle B enthalten.

### Tabelle C

In der Tabelle C werden mögliche Dotierstoffe angegeben, die in der Regel den erfindungsgemäßen Mischungen zugesetzt werden.

| |
|---|
| 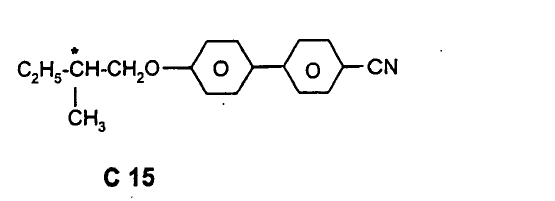 |
| 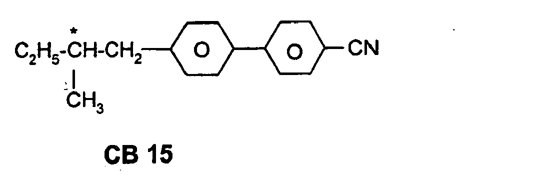 |
| 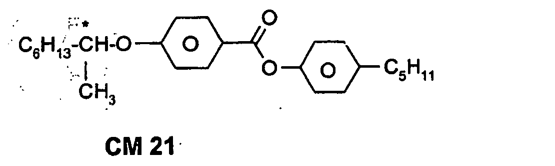 |
| 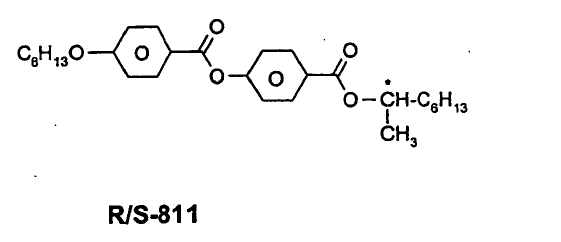 |
| 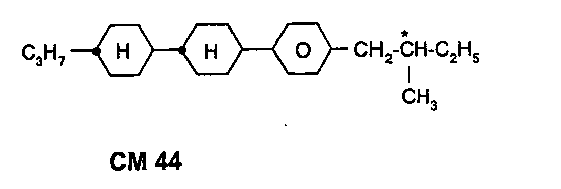 |
| 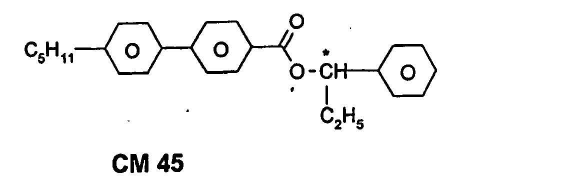 |
| 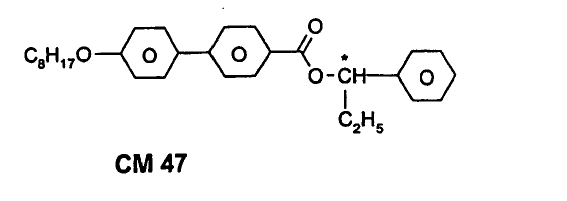 |
| 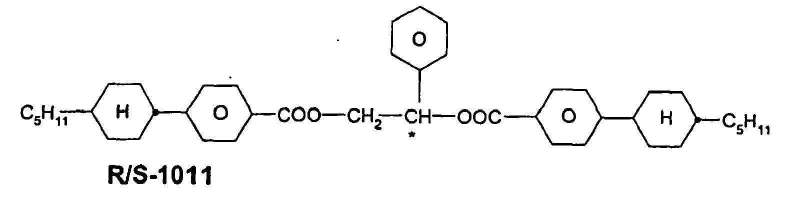 |
| 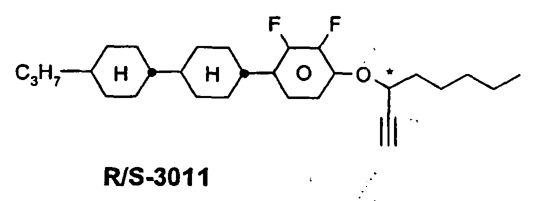 |
| 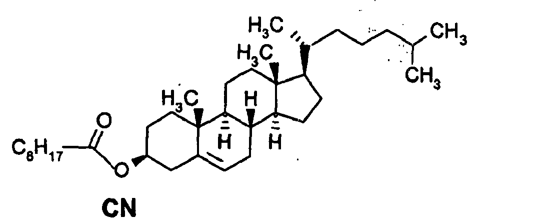 |
| 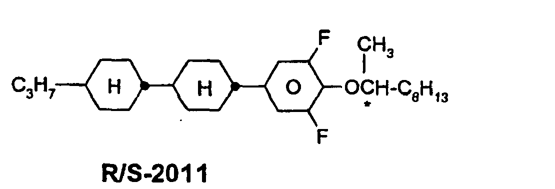 |
| 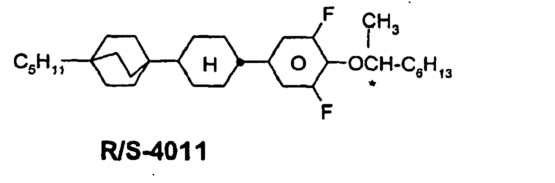 |

### Tabelle D

Stabilisatoren, die beispielsweise den erfindungsgemäßen Mischungen zugesetzt werden können, werden nachfolgend genannt.

| | |
|---|---|
| 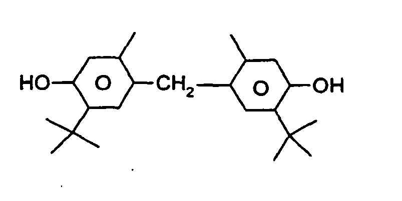 | 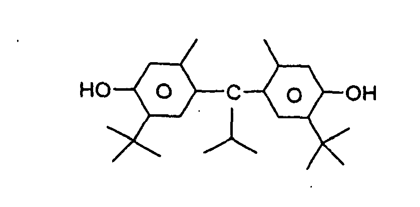 |
| 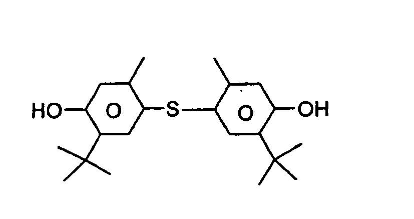 | 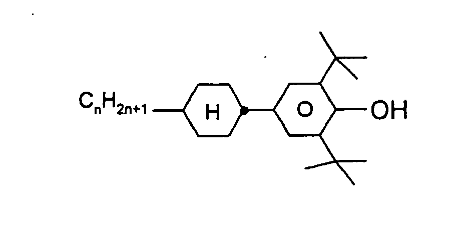 |
| 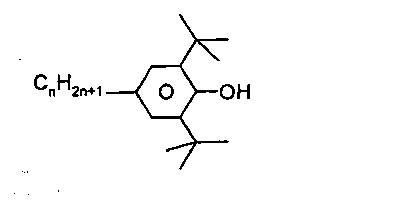 | 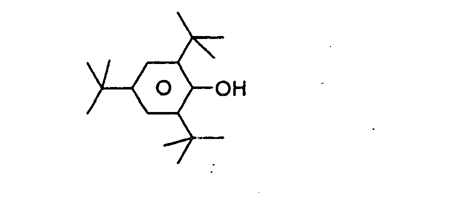 |
| 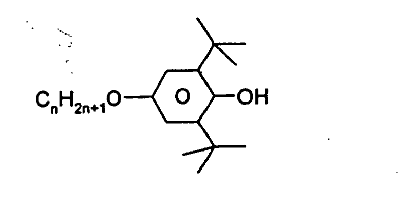 | 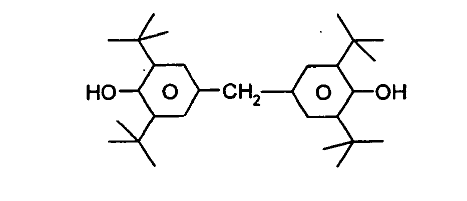 |
| 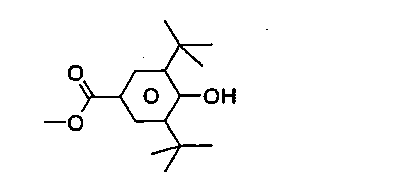 | 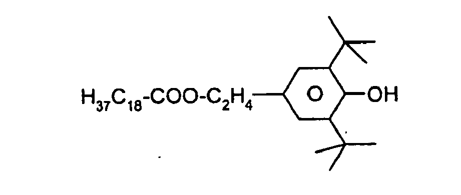 |
| 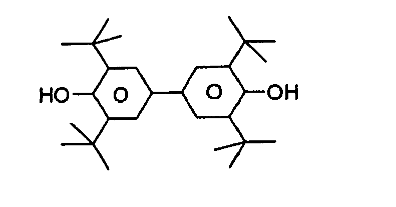 | |
| 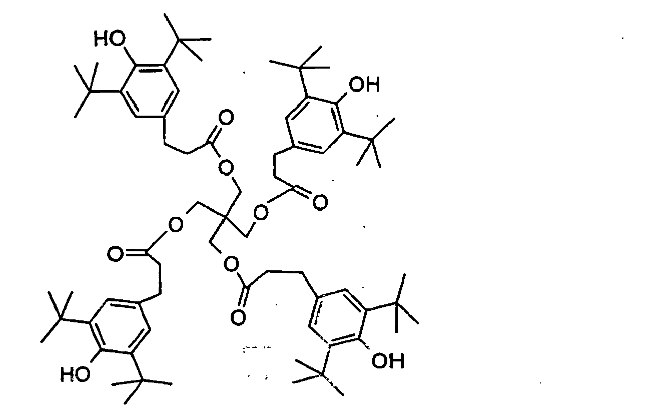 | |
| 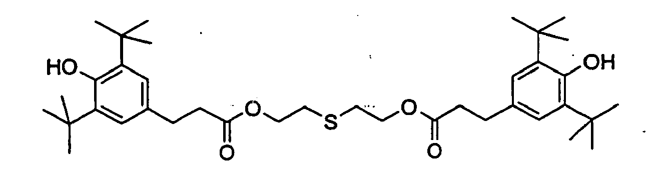 | |
| 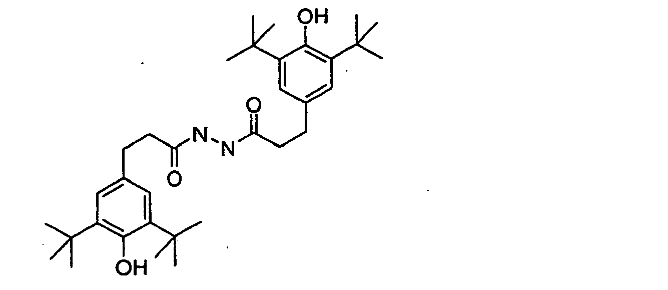 | |
| 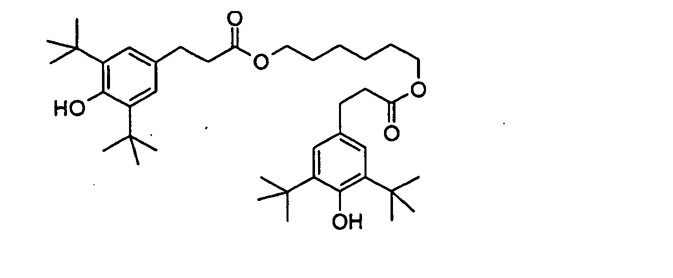 | |
| 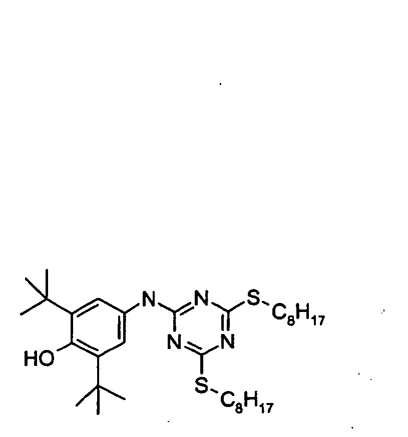 | 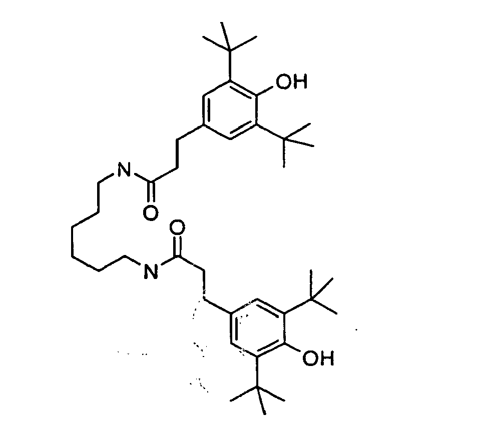 |
| 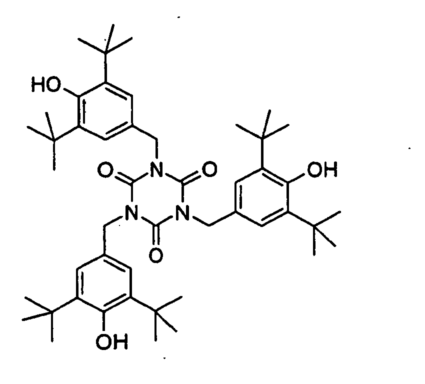 | 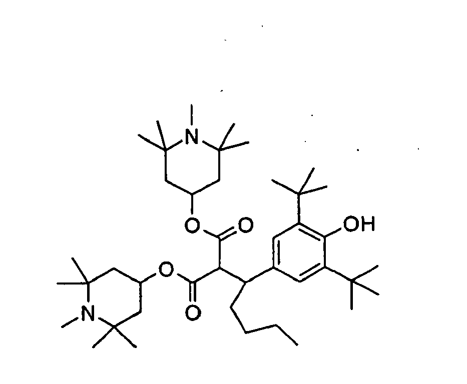 |
| 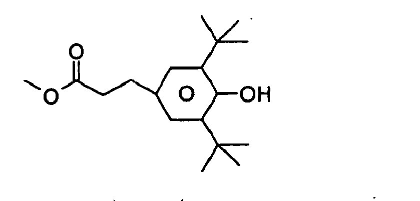 | 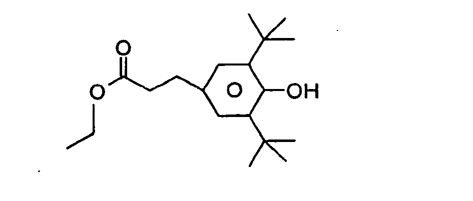 |
| 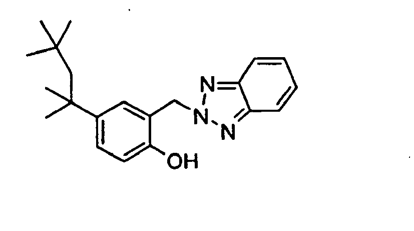 | 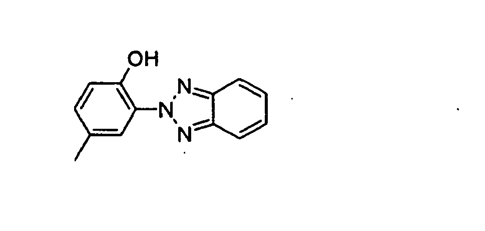 |
| 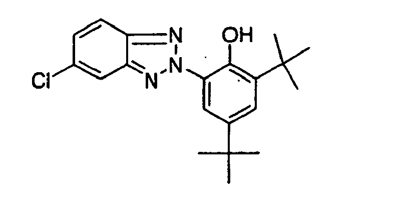 | 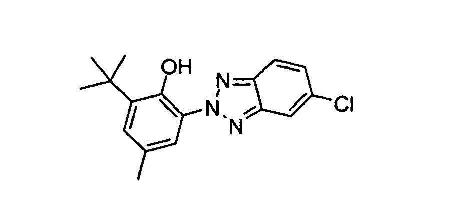 |
| 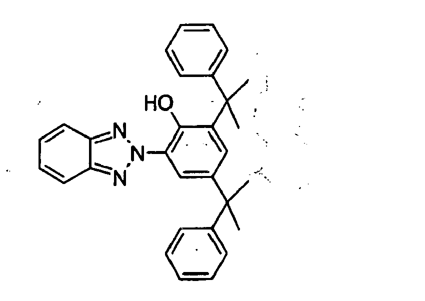 | 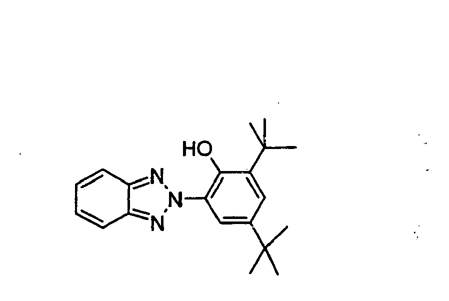 |
| 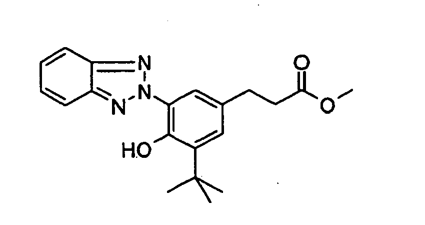 | 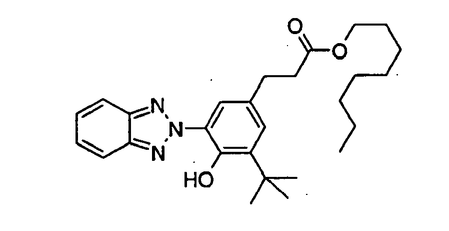 |
| 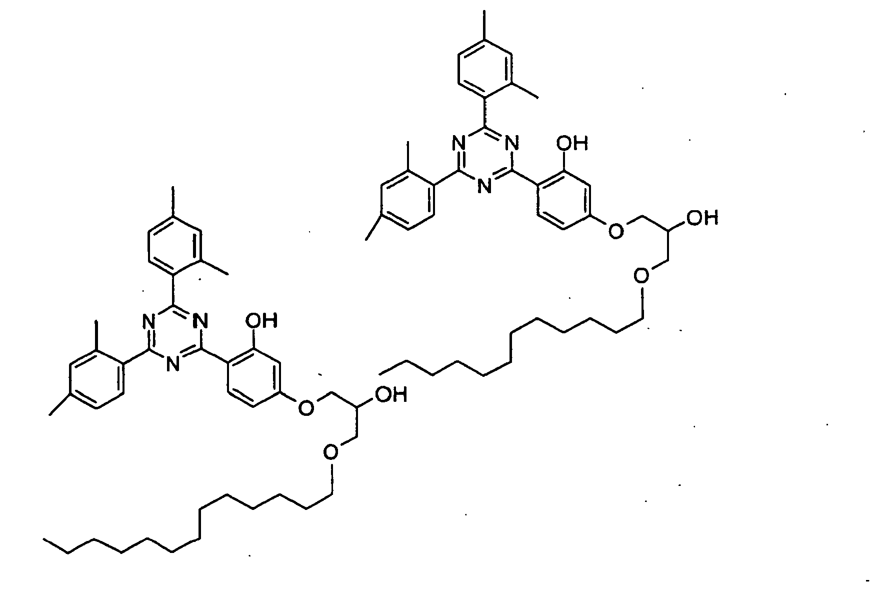 | |
| 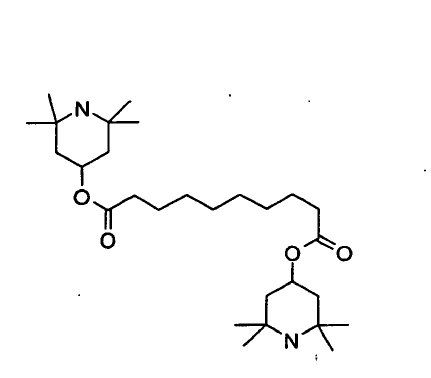 | 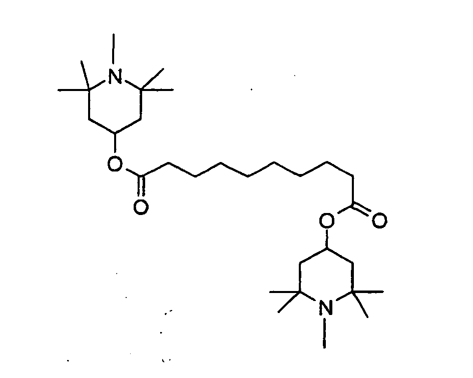 |

Die folgenden Beispiele sollen die Erfindung erläutern, ohne sie zu begrenzen. Vor- und nachstehend bedeuten Prozentangaben Gewichtsprozent. Alle Temperaturen sind in Grad Celsius angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Δn bedeutet optische Anisotropie (589 nm, 20 °C), die Fließviskosität ν₂₀ (mm²/sec) und die Rotationsviskosität γ₁ (mPa·s) wurden jeweils bei 20 °C bestimmt.

### Beispiel M1

| | | | |
|---|---|---|---|
| CCH-5CF₃ | 8,00 % | Klärpunkt [°C]: | 83,0 |
| CCP-1 F.F.F | 6,00 % | Δn [589 nm, 20 °C]: | 0,0663 |
| CCP-2F.F.F | 8,00 % | Δε [1 kHz, 20 °C]: | 11,7 |
| CCP-3F.F.F | 8,00 % | γ₁ [mPa·s, 20 °C]: | 157 |
| CCOC-3-3 | 3,00 % | d·Δn [20 °C]: | 0,50 |
| CCOC-3-5 | 3,00 % | Verdrillung [°]: | 90 |
| CCOC-4-3 | 4,00 % | | |
| CCQU-1-F | 8,00 % | | |
| CCQU-2-F | 9,00 % | | |
| CCQU-3-F | 10,00 % | | |
| CCCQU-3-F | 9,00 % | | |
| CDU-2-F | 8,00 % | | |
| CDU-3-F | 8,00 % | | |
| CDU-5-F | 8,00 % | | |

### Beispiel M2

| | | | |
|---|---|---|---|
| CCP-2F.F.F | 8,00 % | Klärpunkt [°C]: | 83,0 |
| CCH-34 | 12,00 % | Δn [589 nm, 20 °C]: | 0,0659 |
| DCU-3-F | 6,00 % | Δε [1 kHz, 20 °C]: | 12,3 |
| DCU-4-F | 8,00 % | γ₁ [mPa·s, 20 °C]: | 148 |
| DCU-5-F | 8,00 % | d·Δn [20 °C]: | 0,50 |
| CECU-2-F | 7,00 % | Verdrillung [°]: | 90 |
| CECU-3-F | 7,00 % | V₁₀[V]: | 1,16 |
| CECU-5-F | 8,00 % | | |
| CCQU-1-F | 8,00 % | | |
| CCQU-2-F | 8,00 % | | |
| CCQU-3-F | 10,00 % | | |
| CCCQU-3-F | 10,00 % | | |

### Beispiel M3

| | | | |
|---|---|---|---|
| CCP-2F.F.F | 11,00 % | Klärpunkt [°C]: | 85,5 |
| CCP-3F.F.F | 11,00 % | Δn [589 nm, 20 °C]: | 0,0754 |
| CCP-5F.F.F | 6,00 % | Δε [1 kHz, 20 °C]: | 12,0 |
| CCZU-2-F | 4,00 % | γ₁ [mPa·s, 20 °C]: | 155 |
| CCZU-3-F | 14,00 % | d·Δn [20 °C]: | 0,50 |
| CCZU-5-F | 4,00 % | Verdrillung [°]: | 90 |
| CGU-2-F | 7,00 % | V₁₀[V]: | 1,11 |
| CGU-3-F | 4,00 % | | |
| CCH-5CF₃ | 3,00 % | | |
| CCOC-4-3 | 3,00 % | | |
| CCQU-1-F | 8,00 % | | |
| CCQU-2-F | 10,00 % | | |
| CCQU-3-F | 9,00 % | | |
| CCCQU-3-F | 6,00 % | | |

### Beispiel M4

| | | | |
|---|---|---|---|
| CECU-2-F | 8,00 % | Klärpunkt [°C]: | 82,0 |
| CECU-3-F | 8,00 % | Δn [589 nm, 20 °C]: | 0,0749 |
| CECU-5-F | 8,00 % | Δε [1 kHz, 20 °C]: | 11,3 |
| CCP-2F.F.F | 9,00 % | γ₁ [mPa·s, 20 °C]: | 156 |
| CCP-3F.F.F | 10,00 % | | |
| CCZU-2-F | 3,00 % | | |
| CCZU-3-F | 10,00 % | | |
| CCZU-5-F | 3,00 % | | |
| CCQU-1-F | 9,00 % | | |
| CCQU-2-F | 6,00 % | | |
| CCQU-3-F | 6,00 % | | |
| CCCQU-3-F | 8,00 % | | |
| PCH-7F | 5,00 % | | |
| BCH-3F.F.F | 7,00 % | | |

### Beispiel M5

| | | | |
|---|---|---|---|
| CCP-2F.F | 17,00 % | Klärpunkt [°C]: | 83,0 |
| CCP-3F.F | 6,00 % | Δn [589 nm, 20 °C]: | 0,0791 |
| CCZU-2-F | 3,00 % | γ₁ [mPa·s, 20 °C]: | 100 |
| CCZU-3-F | 9,00 % | d·Δn [20 °C]: | 0,50 |
| CCP-31 | 9,00 % | Verdrillung [°]: | 90 |
| CCH-34 | 12,00 % | V₁₀[V]: | 1,65 |
| PCH-7F.F.F | 8,00 % | | |
| CCP-3F | 5,00 % | | |
| PCH-302 | 16,00 % | | |
| PUQU-3-F | 7,00 % | | |
| CCCQU-3-F | 8,00 % | | |

### Beispiel M6

| | | | |
|---|---|---|---|
| BCH-3F.F.F | 18,00 % | Klärpunkt [°C]: | 83,0 |
| BCH-5F.F.F | 10,00 % | Δn [589 nm, 20 °C]: | 0,1032 |
| BCH-2F.F | 9,00 % | γ₁ [mPa·s, 20 °C]: | 158 |
| BCH-3F.F | 9,00 % | d·Δn [20 °C]: | 0,50 |
| BCH-4F.F | 5,00 % | Verdrillung [°]: | 90 |
| CCP-2F.F | 8,00 % | V₁₀ [V]: | 1,27 |
| DCU-3-F | 3,00 % | | |
| DCU-4-F | 4,00 % | | |
| DCU-5-F | 9,00 % | | |
| CCP-31 | 7,00 % | | |
| CCH-34 | 12,00 % | | |
| CCCQU-3-F | 6,00 % | | |

### Beispiel M7

| | | | |
|---|---|---|---|
| CCH-34 | 5,00 % | Klärpunkt [°C]: | 79,0 |
| PCH-5Cl | 8,00 % | Δn [589 nm, 20 °C]: | 0,0923 |
| CCP-3F.F | 13,00 % | γ₁ [mPa·s, 20 °C]: | 160 |
| CCP-2F.F.F | 9,00 % | d·Δn [20 °C]: | 0,50 |
| CCP-4F.F.F | 6,00 % | Verdrillung [°]: | 90 |
| BCH-2F.F | 7,00 % | V₁₀ [V]: | 1,22 |
| BCH-3F.F.F | 15,00 % | | |
| BCH-5F.F.F | 7,00 % | | |
| DCU-3-F | 3,00 % | | |
| DCU-4-F | 5,00 % | | |
| DCU-5-F | 8,00 % | | |
| CCCQU-3-F | 7,00 % | | |
| CCP-31 | 7,00 % | | |

### Beispiel M8

| | | | |
|---|---|---|---|
| CCH-34 | 6,00 % | Klärpunkt [°C]: | 80,0 |
| PCH-5Cl | 8,00 % | Δn [589 nm, 20 °C]: | 0,0932 |
| CCP-3F.F | 14,00 % | γ₁ [mPa·s, 20 °C]: | 135 |
| CCP-4F.F | 13,00 % | d·Δn [20 °C]: | 0,50 |
| CCP-2F.F.F | 9,00 % | Verdrillung [°]: | 90 |
| CCP-4F.F.F | 8,50 % | V₁₀ [V]: | 1,25 |
| BCH-2F.F | 4,00 % | | |
| CCCQU-3-F | 8,00 % | | |
| CCP-31 | 9,00 % | | |
| PUQU-2-F | 6,00 % | | |
| PUQU-3-F | 8,00 % | | |
| PUQU-5-F | 6,50 % | | |

### Beispiel M9

| | | | |
|---|---|---|---|
| CCP-2F.F | 4,50 % | Klärpunkt [°C]: | 78,5 |
| CCP-3F.F | 13,00 % | Δn [589 nm, 20 °C]: | 0,0797 |
| CCP-2F.F.F | 6,50 % | γ₁ [mPa·s, 20 °C]: | 125 |
| PCH-7F.F.F | 9,00 % | d·Δn [20 °C]: | 0,50 |
| CCZU-2-F | 3,00 % | Verdrillung [°]: | 90 |
| CCZU-3-F | 10,00 % | V₁₀[V]: | 1,24 |
| CCZU-4-F | 3,00 % | | |
| DCU-3-F | 2,50 % | | |
| DCU-4-F | 5,00 % | | |
| PUQU-2-F | 6,00 % | | |
| PUQU-3-F | 2,50 % | | |
| CCP-3F | 3,00 % | | |
| CCP-31 | 9,00 % | | |
| CCH-34 | 5,00 % | | |
| PCH-302 | 10,00 % | | |
| CCCQU-3-F | 8,00 % | | |

### Beispiel M10

| | | | |
|---|---|---|---|
| CCP-3F.F | 12,50 % | Klärpunkt [°C]: | 80,0 |
| CCP-2F.F.F | 5,00 % | Δn [589 nm, 20 °C]: | 0,080 |
| PCH-7F.F.F | 8,00 % | γ₁ [mPa·s, 20 °C]: | 140 |
| CCZU-2-F | 3,00 % | d·Δn [20 °C]: | 0,50 |
| CCZU-3-F | 10,00 % | Verdrillung [°]: | 90 |
| CCZU-4-F | 3,00% | V₁₀ [V]: | 1,25 |
| DCU-3-F | 3,00 % | | |
| DCU-4-F | 5,00 % | | |
| DCU-5-F | 8,00 % | | |
| BCH-3F.F.F | 9,50 % | | |
| CCP-31 | 9,00 % | | |
| CCH-34 | 5,00 % | | |
| PCH-302 | 11,00 % | | |
| CCCQU-3-F | 8,00 % | | |

### Beispiel M11

| | | | |
|---|---|---|---|
| BCH-3F.F | 10,80 % | Klärpunkt [°C]: | 107,5 |
| BCH-5F.F | 9,00 % | Δn [589 nm, 20 °C]: | 0,0970 |
| ECCP-30CF₃ | 4,50 % | ν [kHz, 20 °C]: | 5,9 |
| ECCP-50CF₃ | 4,50 % | | |
| CBC-33F | 1,80 % | | |
| CBC-53F | 1,80 % | | |
| CBC-55F | 1,80 % | | |
| PCH-6F | 7,20 % | | |
| PCH-7F | 5,40 % | | |
| CCP-20CF₃ | 7,20 % | | |
| CCP-30CF₃ | 10,80 % | | |
| CCP-40CF₃ | 6,30 % | | |
| CCP-50CF₃ | 9,90 % | | |
| PCH-5F | 9,00 % | | |
| CCCQU-3-F | 10,00 % | | |

### Beispiel M12

| | | | |
|---|---|---|---|
| BCH-3F.F | 10,91 % | Klärpunkt [°C]: | 106,0 |
| BCH-5F.F | 9,09 % | | |
| ECCP-30CF₃ | 4,55 % | | |
| ECCP-50CF₃ | 4,55 % | | |
| CBC-33F | 1,82 % | | |
| CBC-53F | 1,82 % | | |
| CBC-55F | 1,82 % | | |
| PCH-6F | 7,27 % | | |
| PCH-7F | 5,45 % | | |
| CCP-20CF₃ | 7,27 % | | |
| CCP-30CF₃ | 10,91 % | | |
| CCP-40CF₃ | 6,36 % | | |
| CCP-50CF₃ | 10,00 % | | |
| PCH-5F | 9,09 % | | |
| CCCQU-3-F | 9,10% | | |

### Beispiel M13

| | | | |
|---|---|---|---|
| CCH-301 | 12,59 % | Klärpunkt [°C]: | 97,5 |
| CCH-3CF₃ | 7,20 % | Δn [589 nm, 20 °C]: | 0,0639 |
| CCH-501 | 9,89 % | ν [kHz, 20 °C]: | 7,3 |
| CCP-2F.F.F | 8,99 % | | |
| CCP-3F.F.F | 11,69 % | | |
| CCP-5F.F.F | 4,50 % | | |
| CCPC-33 | 2,70 % | | |
| CCZU-2-F | 4,50 % | | |
| CCZU-3-F | 15,29 % | | |
| CCZU-5-F | 4,50 % | | |
| CH-33 | 2,70 % | | |
| CH-35 | 2,70 % | | |
| CH-43 | 2,70 % | | |
| CCCQU-3-F | 10,06 % | | |

## Patentansprüche

1. Flüssigkristallines Medium auf der Basis eines Gemisches von polaren Verbindungen mit positiver dielektrischer Anisotropie, **dadurch gekennzeichnet, dass** es eine oder mehrere Verbindungen der Formel I, 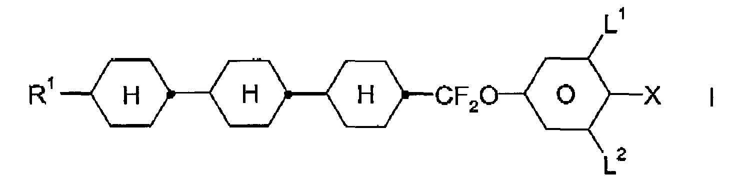 worin
R¹ einen halogenierten oder unsubstituierten Alkyl- oder Alkoxyrest mit 1 bis 15 C-Atomen, wobei in diesen Resten auch eine oder mehrere CH₂-Gruppen jeweils unabhängig voneinander durch -C≡C-, -CH=CH-, -O-, -CO-O- oder -O-CO- so ersetzt sein können, dass O-Atome nicht direkt miteinander verknüpft sind,
X F, Cl, CN, SF₅, halogenierter Alkylrest, halogenierter Alkenylrest, halogenierter Alkoxyrest oder halogenierter Alkenyloxyrest mit bis zu 6 C-Atomen,
L¹ und L² jeweils unabhängig voneinander H oder F
bedeuten,
und eine oder mehrere Verbindungen der Formeln 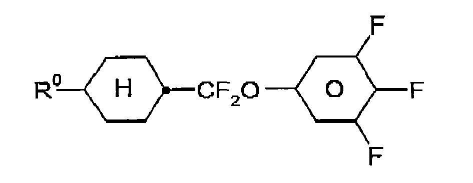 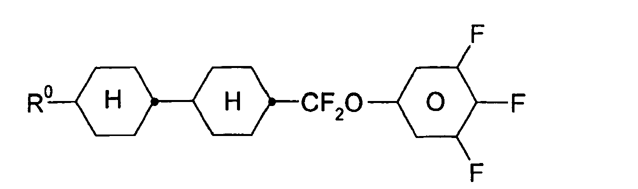 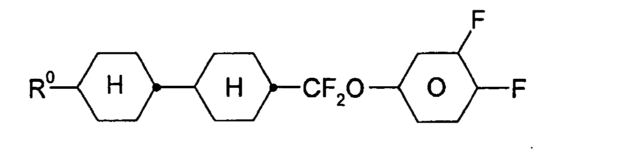 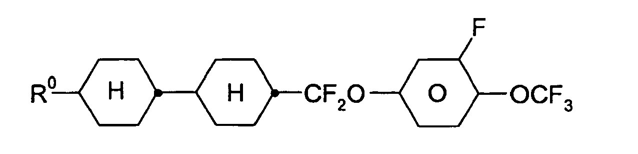 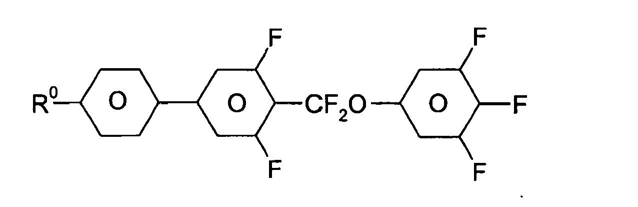 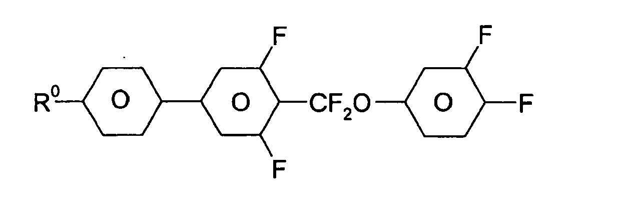 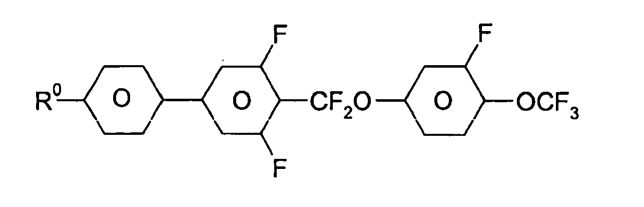 worin
R⁰ n-Alkyl, Oxaalkyl, Fluoralkyl oder Alkenyl mit jeweils bis zu 9 C-Atomen
bedeutet, enthält.

2. Flüssigkristallines Medium nach Anspruch 1, **dadurch gekennzeichnet, dass** es ein, zwei oder mehr Verbindungen der Formeln I-1 bis I-9 enthält, 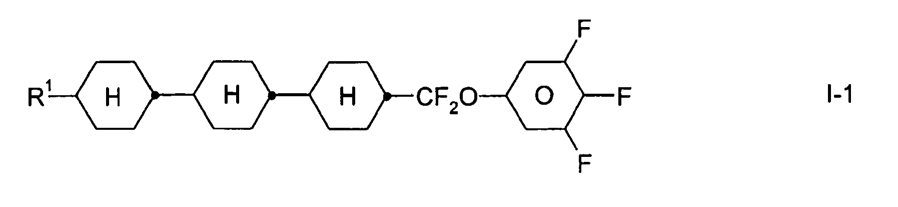 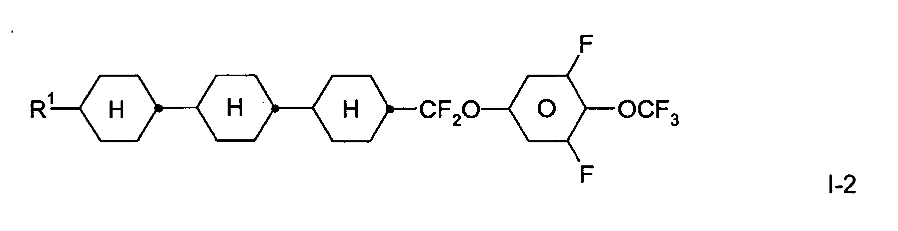 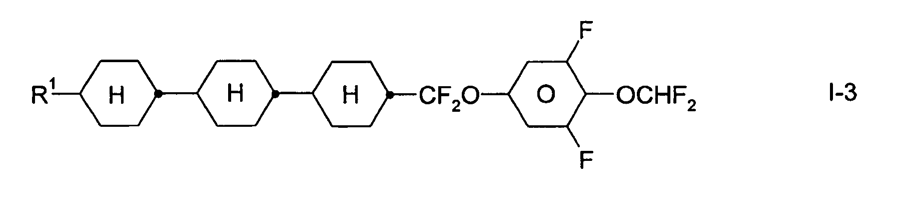 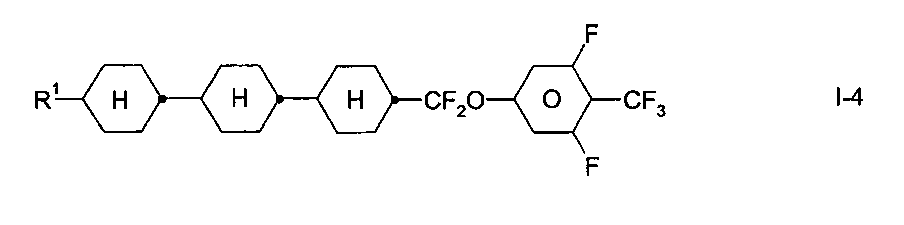 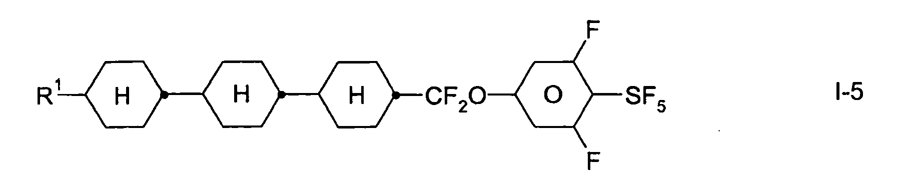 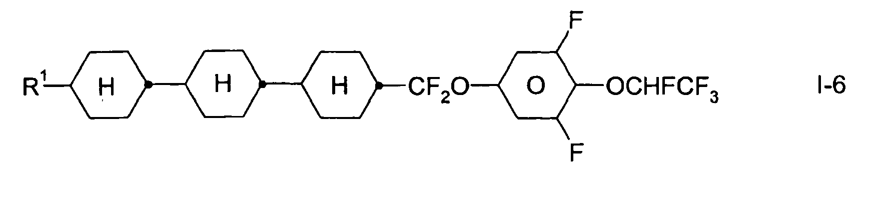 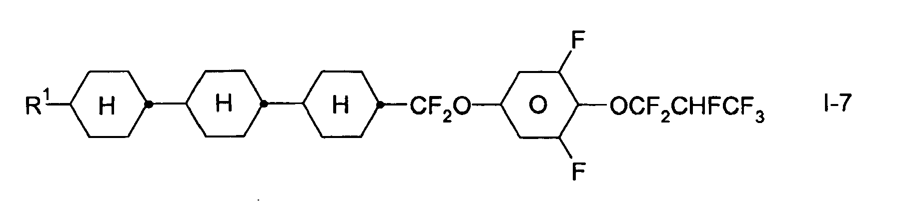 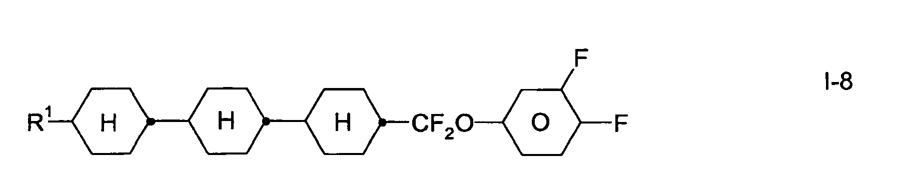 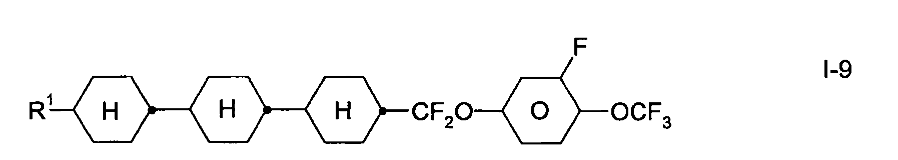 worin R¹ die in Anspruch 1 angegebene Bedeutung hat.

3. Flüssigkristallines Medium nach Anspruch 1 oder 2, **dadurch gekennzeichnet, dass** es zusätzlich eine oder mehrere Verbindungen ausgewählt aus der Gruppe bestehend aus den allgemeinen Formeln II, III, IV, V und VI enthält: 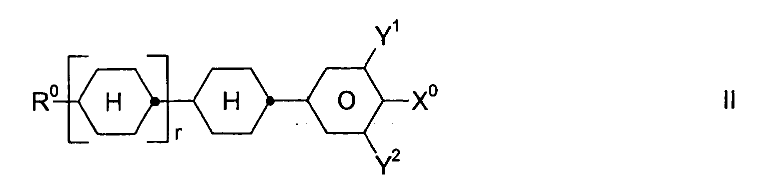 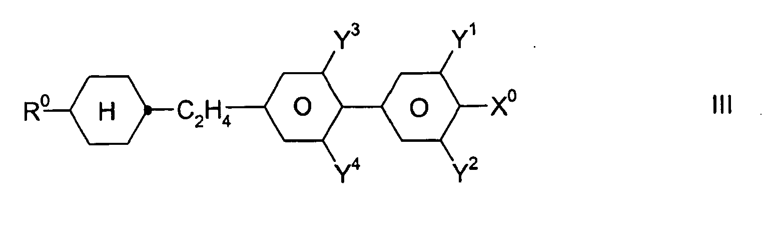 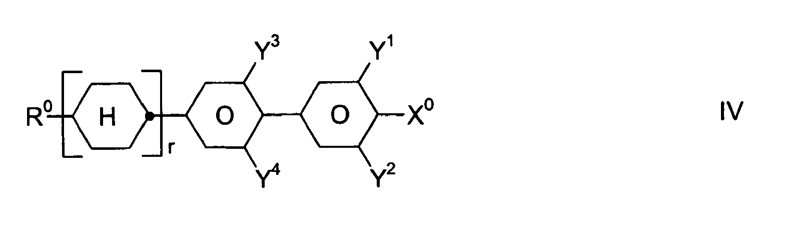 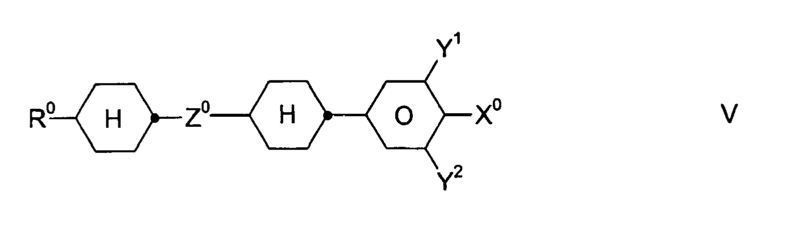 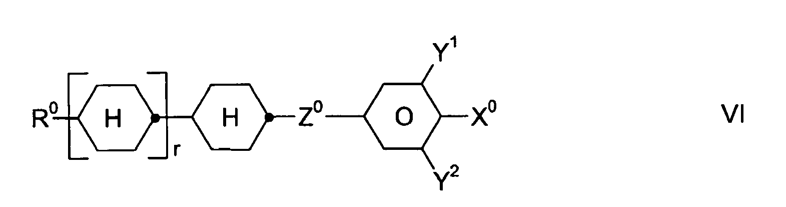 worin die einzelnen Reste die folgenden Bedeutungen haben:
R⁰ n-Alkyl, Oxaalkyl, Fluoralkyl oder Alkenyl mit jeweils bis zu 9 C-Atomen,
X⁰ F, Cl, halogeniertes Alkyl, halogeniertes Alkenyl, halogeniertes Alkenyloxy oder halogeniertes Alkoxy mit bis zu 6 C-Atomen,
Z⁰ -C₂F₄-, -CF=CF-, -C₂H₄-, -(CH₂)₄-, -OCH₂-, -CH₂O-, -CF₂O- oder -OCF₂-,
Y¹ bis Y⁴ jeweils unabhängig voneinander H oder F,
r 0 oder 1.

4. Flüssigkristallines Medium nach Anspruch 3, **dadurch gekennzeichnet, dass** der Anteil an Verbindungen der Formeln I bis VI zusammen im Gesamtgemisch mindestens 50 Gew.-% beträgt.

5. Flüssigkristallines Medium nach mindestens einem der Ansprüche 1 bis 4, **dadurch gekennzeichnet, dass** es zusätzlich eine oder mehrere Verbindungen der Formeln E-a bis E-d, 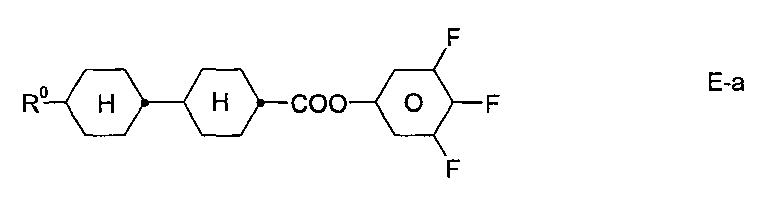 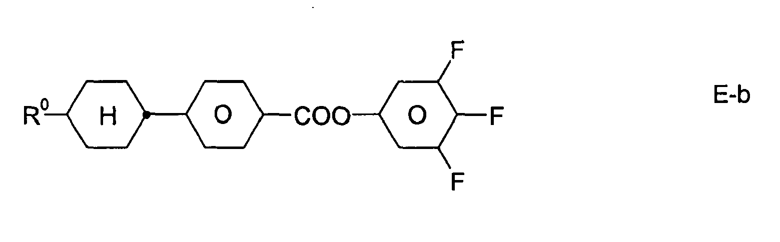 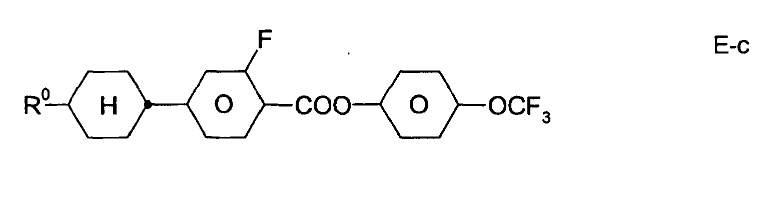 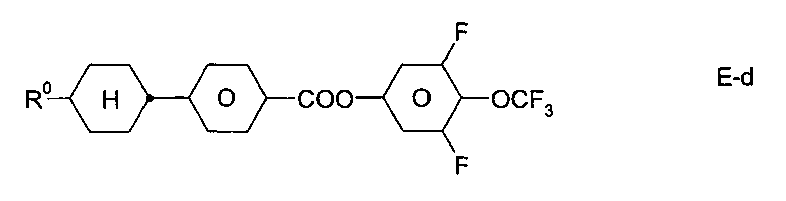 worin R⁰ die in Anspruch 3 angegebenen Bedeutungen hat, enthält.

6. Flüssigkristallines Medium nach mindestens einem der Ansprüche 1 bis 5, **dadurch gekennzeichnet, dass** es eine oder mehrere Verbindungen der Formeln lla bis IIg, 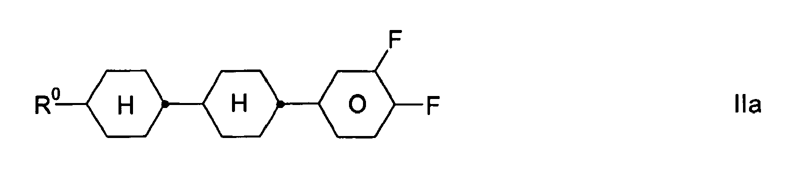 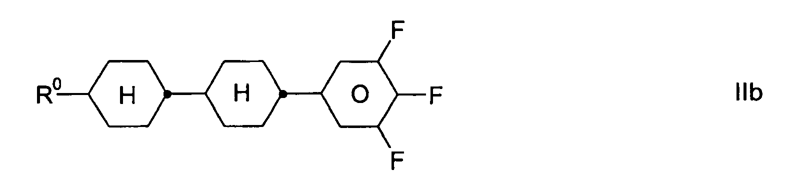 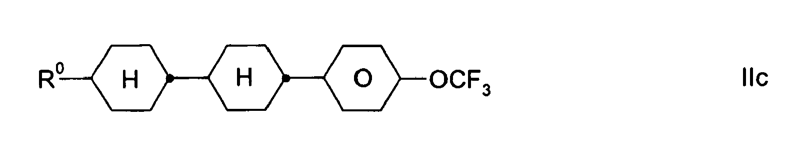 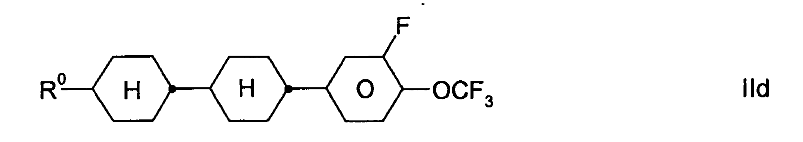 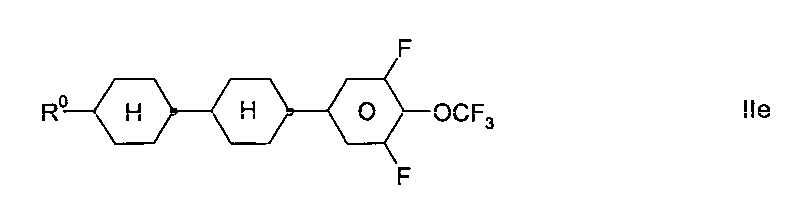 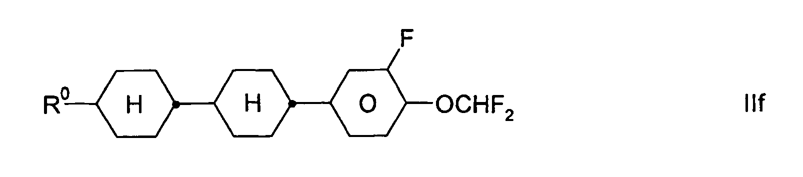 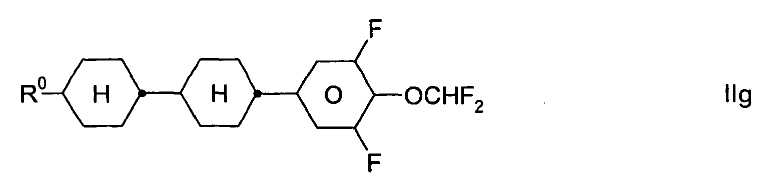 worin R⁰ die in Anspruch 3 angegebenen Bedeutungen hat,
enthält.

7. Flüssigkristallines Medium nach einem der Ansprüche 1 bis 6, **dadurch gekennzeichnet, dass** es ein oder mehrere Verbindungen der Formeln O1 und 02, 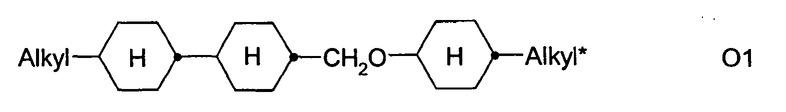 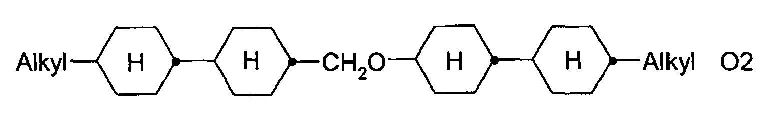 worin
Alkyl und Alkyl* jeweils unabhängig voneinander eine geradkettige oder verzweigte Alkylgruppe mit 1-7 Kohlenstoffatomen bedeuten,
enthält.

8. Flüssigkristallines Medium nach einem der Ansprüche 1 bis 7, **dadurch gekennzeichnet, dass** es ein oder mehrere Dioxan-Verbindungen der Formeln D1 und/oder D2, 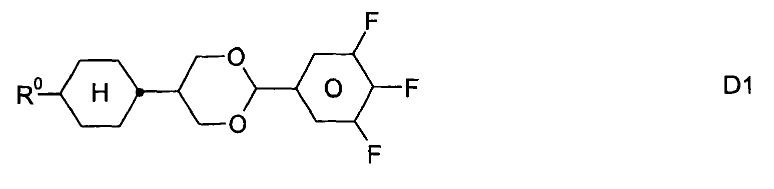 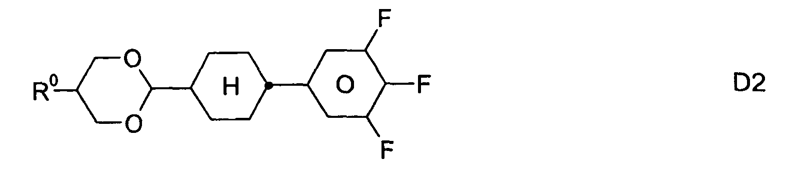 worin
R⁰ die in Anspruch 3 angegebenen Bedeutungen hat,
enthält.

9. Flüssigkristallines Medium nach mindestens einem der Ansprüche 1 bis 8, **dadurch gekennzeichnet, dass** R⁰ n-Alkyl mit 2-7 C-Atomen oder Fluoralkyl oder Alkenyl mit bis zu 9 C-Atomen bedeutet.

10. Flüssigkristallines Medium nach mindestens einem der Ansprüche 1 bis 9, **dadurch gekennzeichnet, dass** der Anteil an Verbindungen der Formel I im Gesamtgemisch 0,5 bis 40 Gew.% beträgt.

11. Verwendung des flüssigkristallinen Mediums nach mindestens einem der Ansprüche 1 bis 10 für elektrooptische Zwecke.

12. Elektrooptische Flüssigkristallanzeige enthaltend ein flüssigkristallines Medium nach mindestens einem der Ansprüche 1 bis 10.

## Claims

1. Liquid-crystalline medium based on a mixture of polar compounds of positive dielectric anisotropy, **characterised in that** it comprises one or more compounds of the formula I 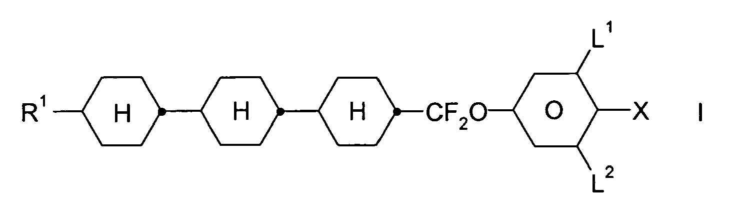 in which
R¹ denotes a halogenated or unsubstituted alkyl or alkoxy radical having 1 to 15 C atoms, where, in addition, one or more CH₂ groups in these radicals may each, independently of one another, be replaced by -C≡C-, -CH=CH-, -O-, -CO-O- or -O-CO- in such a way that O atoms are not linked directly to one another,
X denotes F, Cl, CN, SF₅, a halogenated alkyl radical, a halogenated alkenyl radical, a halogenated alkoxy radical or a halogenated alkenyloxy radical having up to 6 C atoms,
L¹ and L² each, independently of one another, denote H or F,
and one or more compounds of the formulae 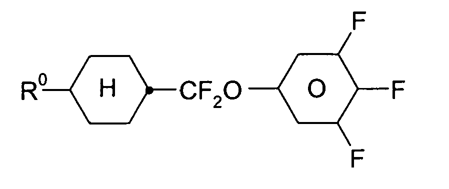 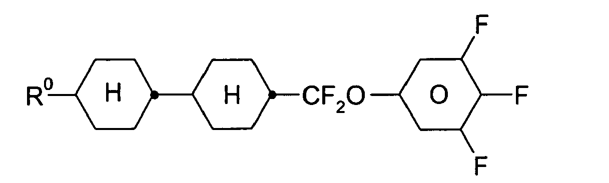 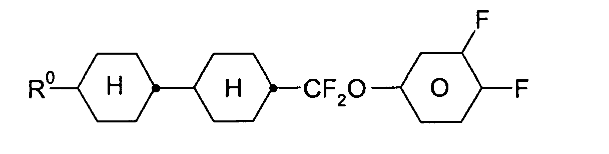 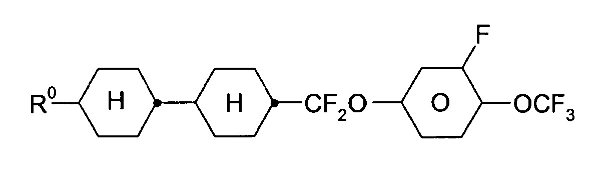 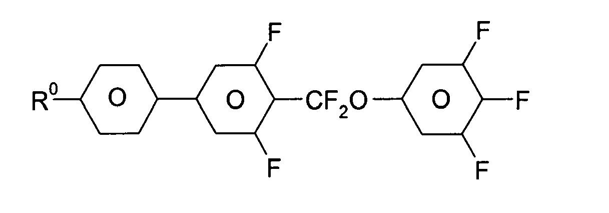 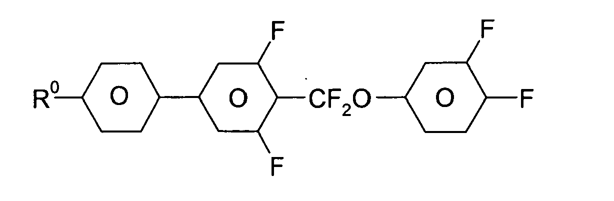 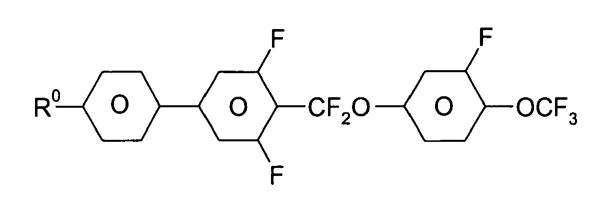 in which
R⁰ denotes n-alkyl, oxaalkyl, fluoroalkyl or alkenyl, each having up to 9 C atoms.

2. Liquid-crystalline medium according to Claim 1, **characterised in that** it comprises one, two or more compounds of the formulae I-1 to I-9 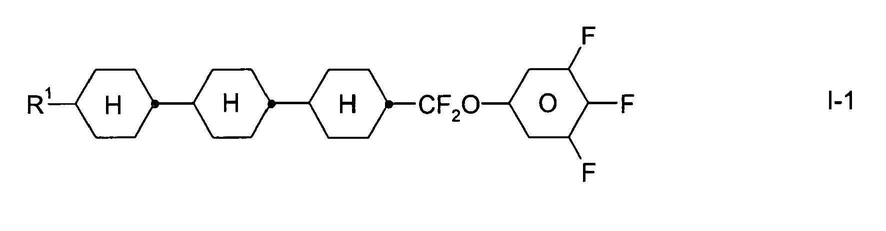 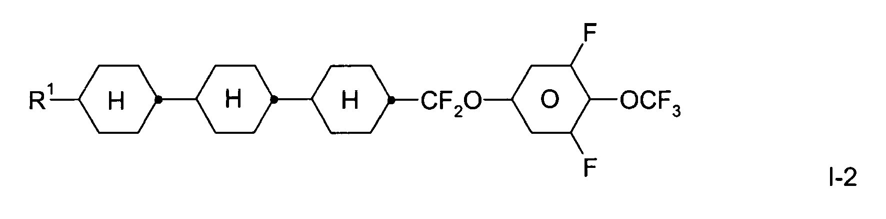 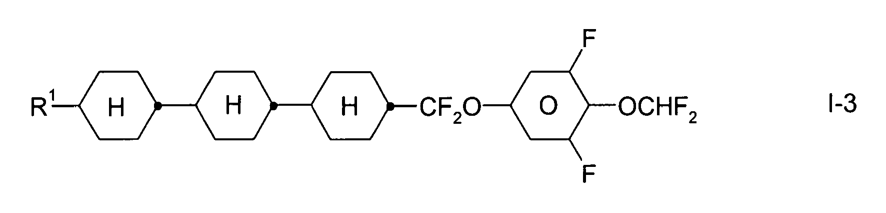 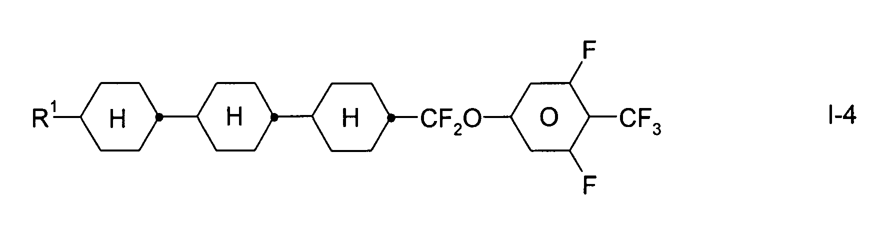 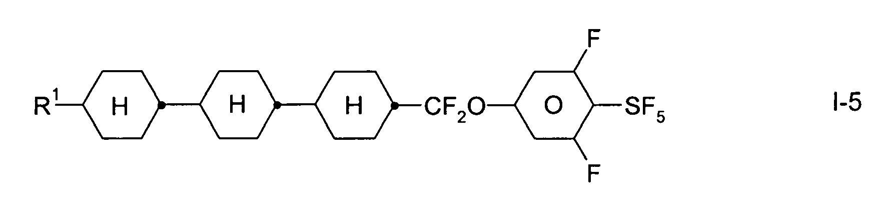 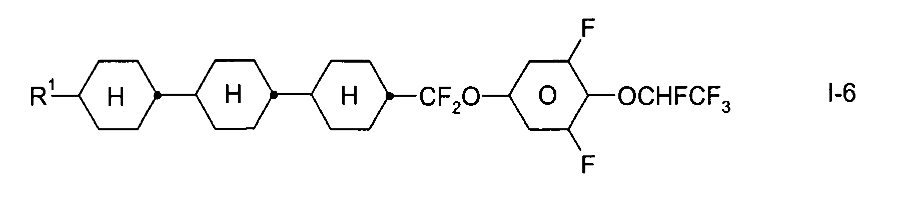 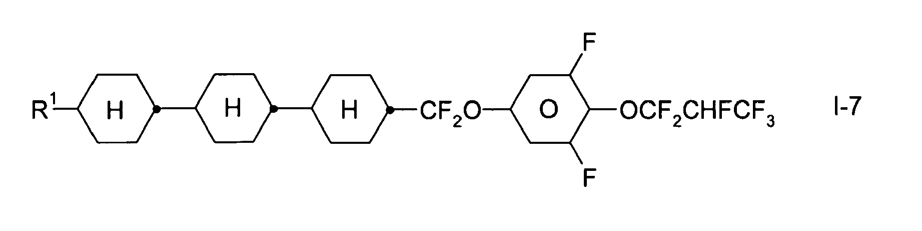 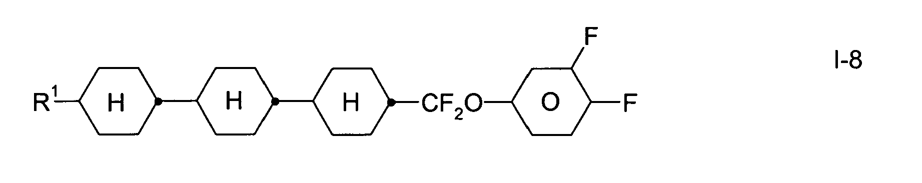 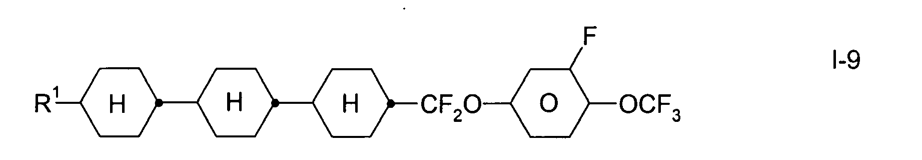 in which R¹ has the meaning indicated in Claim 1.

3. Liquid-crystalline medium according to Claim 1 or 2, **characterised in that** it additionally comprises one or more compounds selected from the group consisting of the general formulae II, III, IV, V and VI: 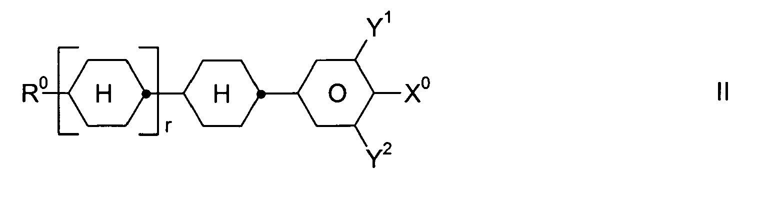 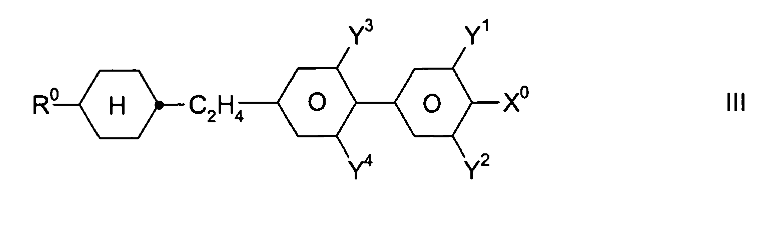 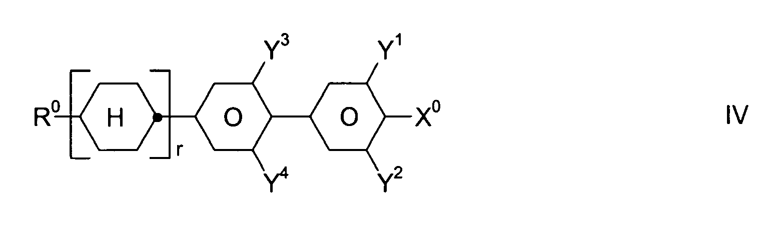 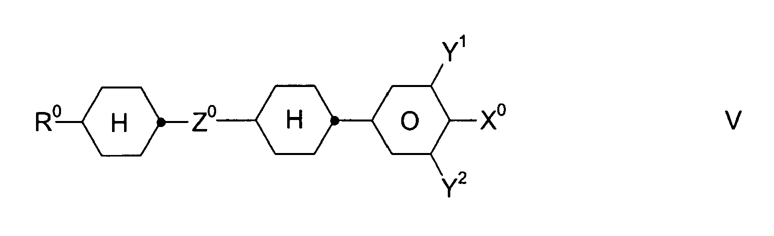 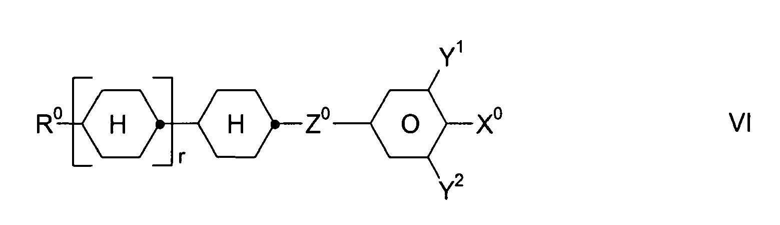 in which the individual radicals have the following meanings:
R⁰ n-alkyl, oxaalkyl, fluoroalkyl or alkenyl, each having up to 9 C atoms,
X⁰ F, Cl, halogenated alkyl, halogenated alkenyl, halogenated alkenyloxy or halogenated alkoxy having up to 6 C atoms,
Z⁰ -C₂F₄-, -CF=CF-, -C₂H₄-, -(CH₂)₄-, -OCH₂-, -CH₂O-, -CF₂O- or -OCF₂-,
Y¹ to Y⁴ each, independently of one another, H or F,
r 0 or 1.

4. Liquid-crystalline medium according to Claim 3, **characterised in that** the proportion of compounds of the formulae I to VI together in the mixture as a whole is at least 50% by weight.

5. Liquid-crystalline medium according to at least one of Claims 1 to 4, **characterised in that** it additionally comprises one or more compounds of the formulae E-a to E-d 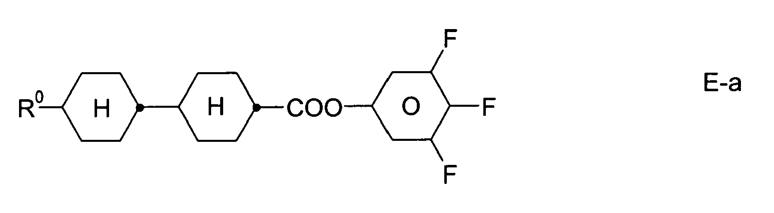 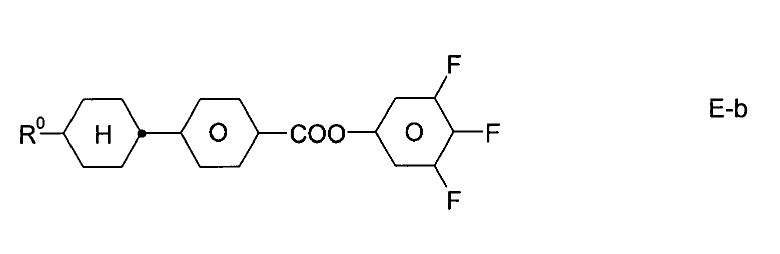 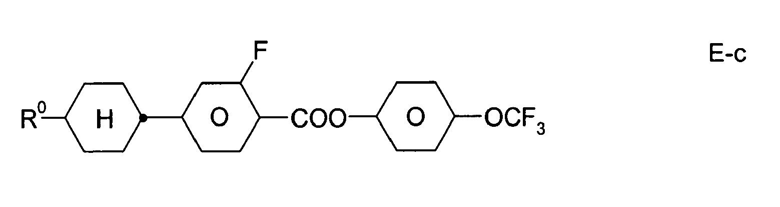 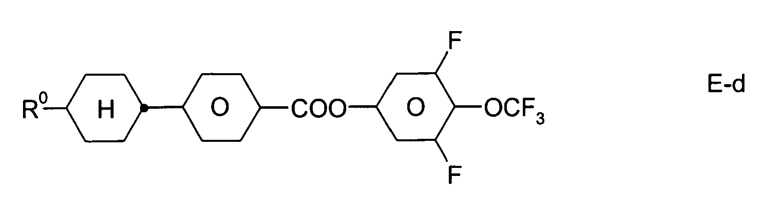 in which R⁰ has the meanings indicated in Claim 3.

6. Liquid-crystalline medium according to at least one of Claims 1 to 5, **characterised in that** it comprises one or more compounds of the formulae IIa to IIg 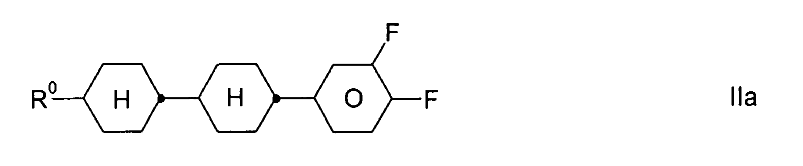 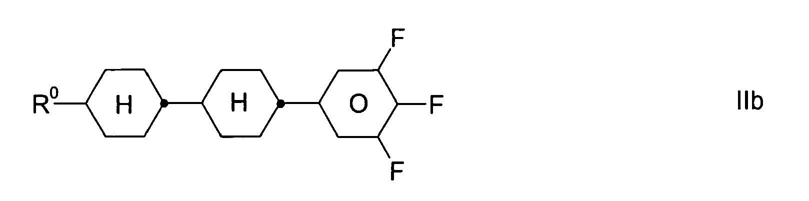 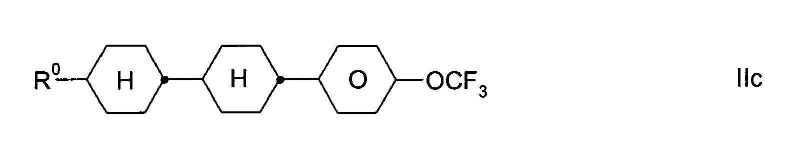 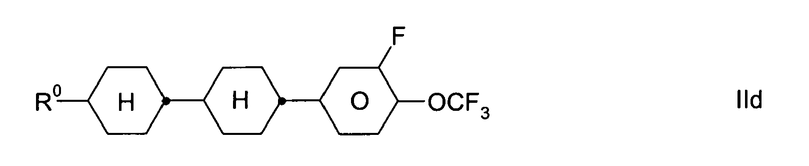 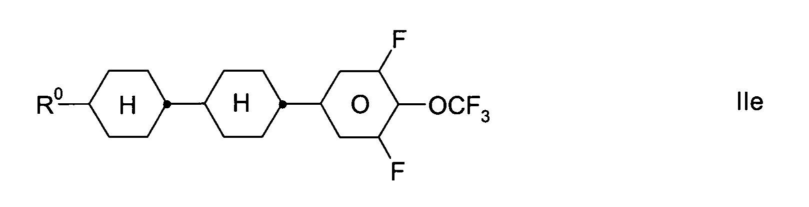 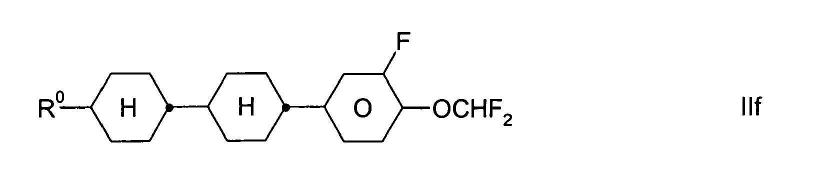 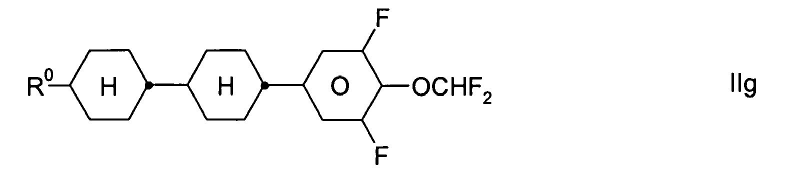 in which R⁰ has the meanings indicated in Claim 3.

7. Liquid-crystalline medium according to one of Claims 1 to 6, **characterised in that** it comprises one or more compounds of the formulae O1 and O2 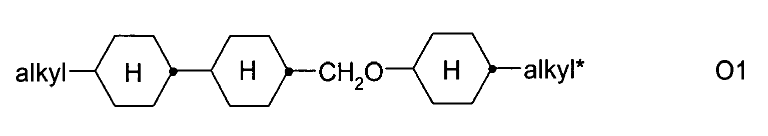 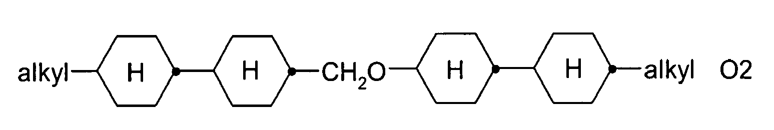 in which
alkyl and alkyl* each, independently of one another, denote a straight-chain or branched alkyl group having 1-7 carbon atoms.

8. Liquid-crystalline medium according to one of Claims 1 to 7, **characterised in that** it comprises one or more dioxane compounds of the formulae D1 and/or D2: 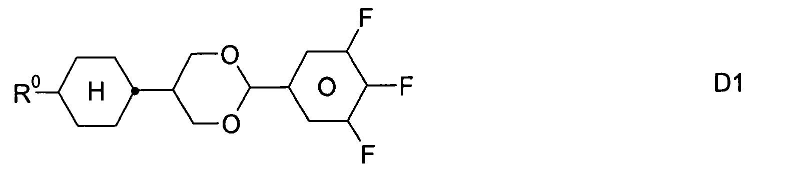 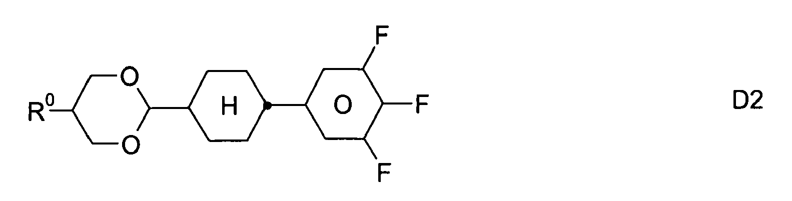 in which
R⁰ has the meanings indicated in Claim 3.

9. Liquid-crystalline medium according to at least one of Claims 1 to 8, **characterised in that** R⁰ denotes n-alkyl having 2-7 C atoms or fluoroalkyl or alkenyl having up to 9 C atoms.

10. Liquid-crystalline medium according to at least one of Claims 1 to 9, **characterised in that** the proportion of compounds of the formula I in the mixture as a whole is 0.5 to 40% by weight.

11. Use of the liquid-crystalline medium according to at least one of Claims 1 to 10 for electro-optical purposes.

12. Electro-optical liquid-crystal display containing a liquid-crystalline medium according to at least one of Claims 1 to 10.

## Revendications

1. Milieu de cristal liquide basé sur un mélange de composés polaires d'une anisotropie diélectrique positive, **caractérisé en ce qu'**il comprend un ou plusieurs composés de la formule I 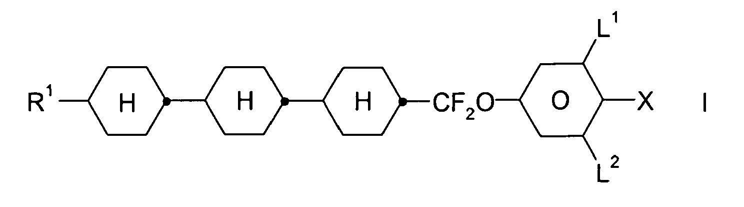 dans laquelle
R¹ représente un radical alkyle ou alkoxy halogéné ou non substitué qui comporte de 1 à 15 atomes de C où, en plus, un ou plusieurs groupes CH₂ dans ces radicaux peuvent chacun, indépendamment les uns des autres, être remplacés par -C≡C-, -CH=CH-, -O-, -CO-O- ou -O-CO- de telle sorte que des atomes de O ne soient pas liés directement les uns aux autres,
X représente F, CI, CN, SF₅, un radical alkyle halogéné, un radical alkényle halogéné, un radical alkoxy halogéné ou un radical alkényloxy halogéné comportant jusqu'à 6 atomes de C,
L¹ et L² chacun indépendamment de l'autre, représentent H ou F,
et un ou plusieurs composés des formules 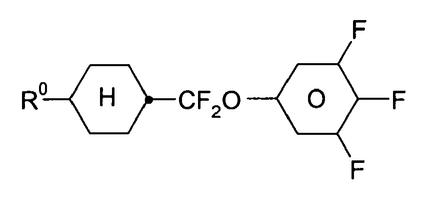 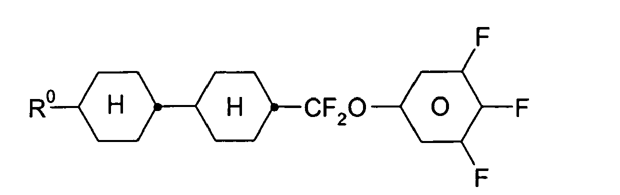 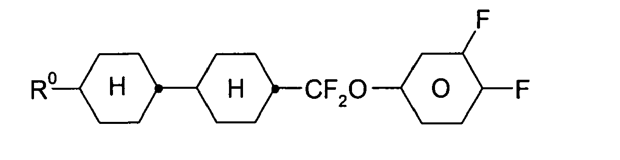 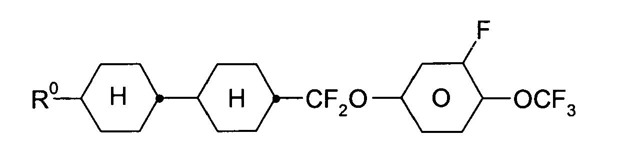 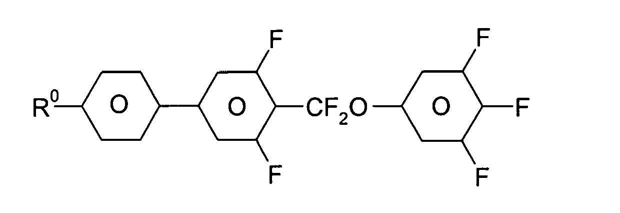 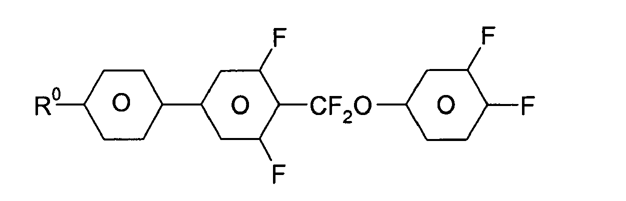 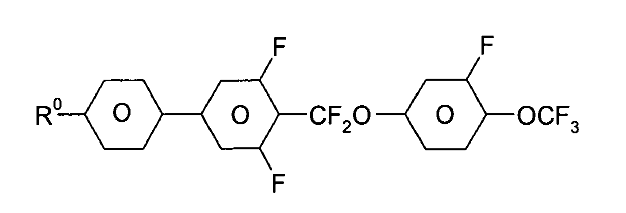 dans lesquelles
R⁰ représente n-alkyle, oxaalkyle, fluoroalkyle ou alkényle dont chacun comporte jusqu'à 9 atomes de C.

2. Milieu de cristal liquide selon la revendication 1, **caractérisé en ce qu'**il comprend 1 ou 2 composés ou plus des formules I-1 à I-9 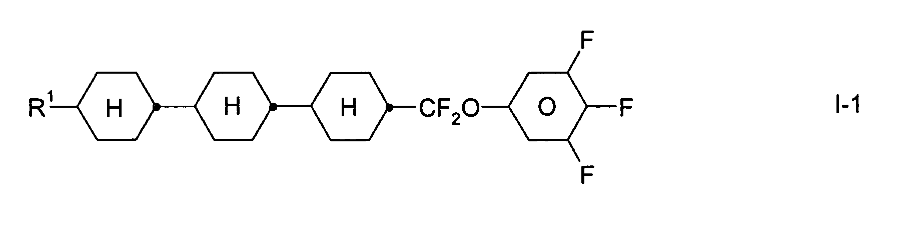 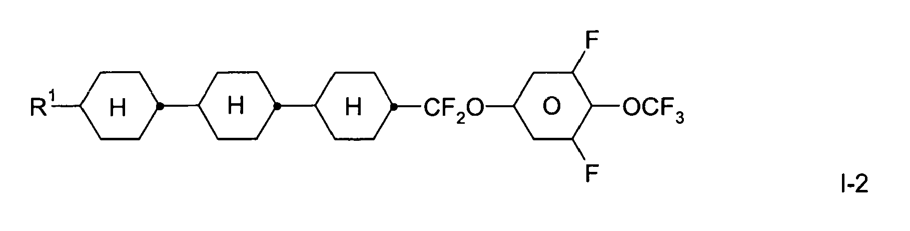 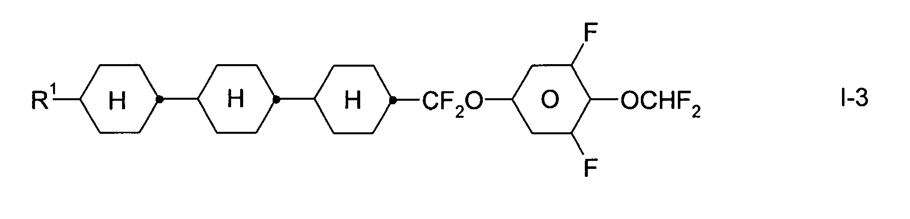 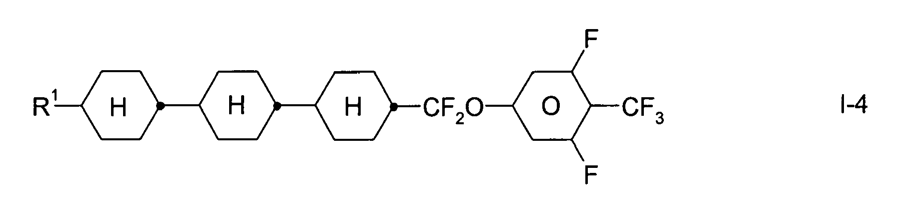 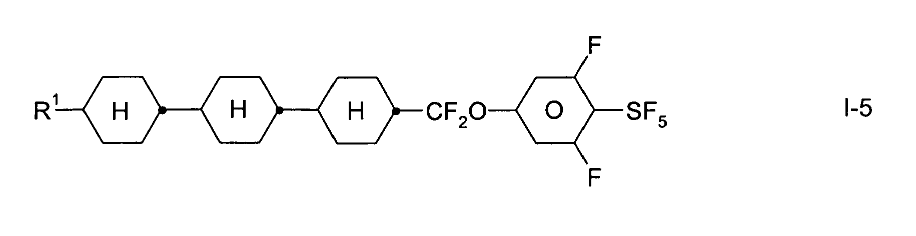 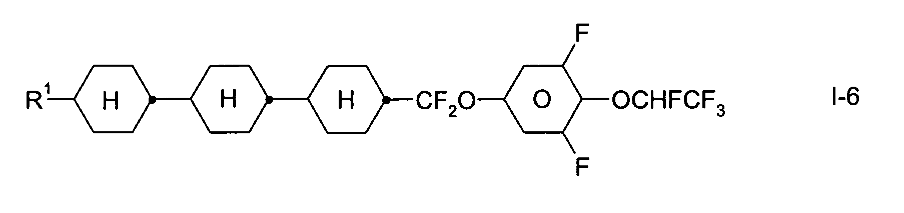 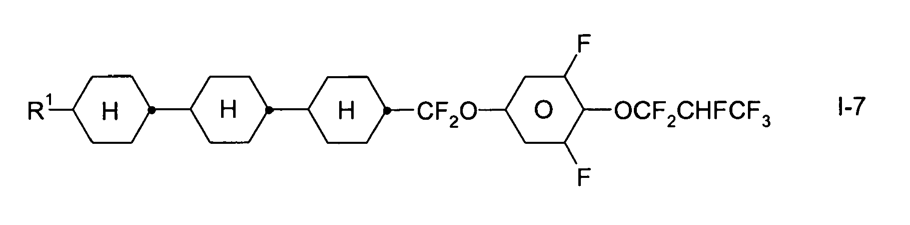 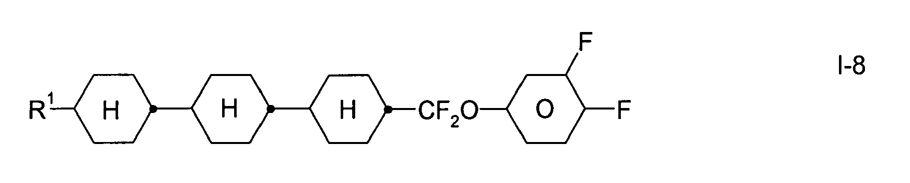 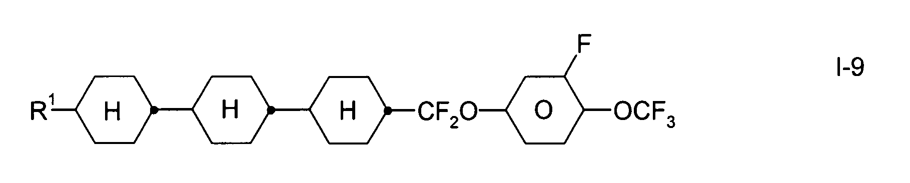 dans lesquelles R¹ présente la signification indiquée selon la revendication 1.

3. Milieu de cristal liquide selon la revendication 1 ou 2, **caractérisé en ce qu'**il comprend de façon additionnelle un ou plusieurs composés choisis parmi le groupe constitué par les formules générales II, III, IV, V et VI : 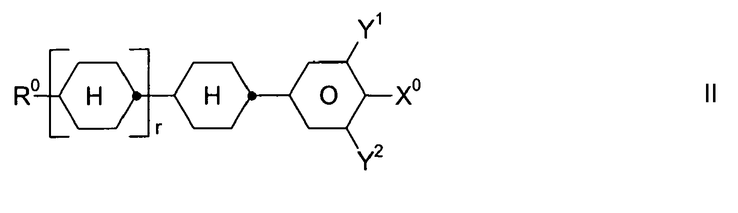 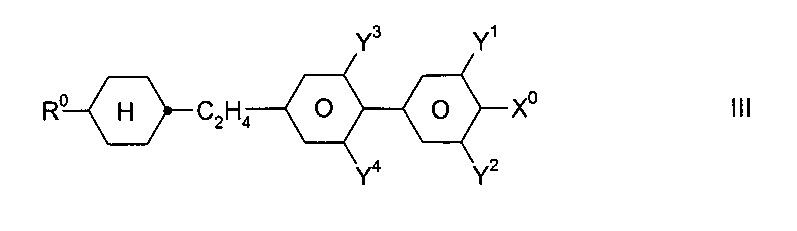 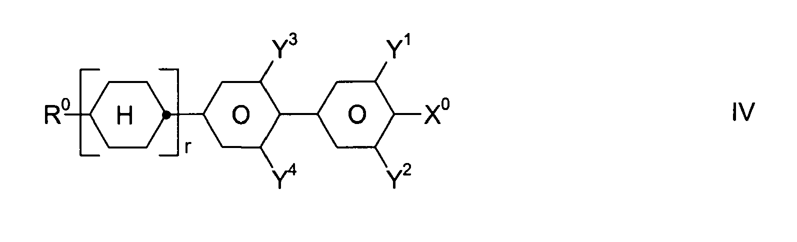 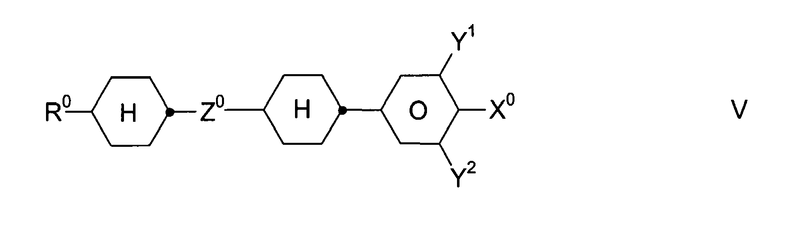 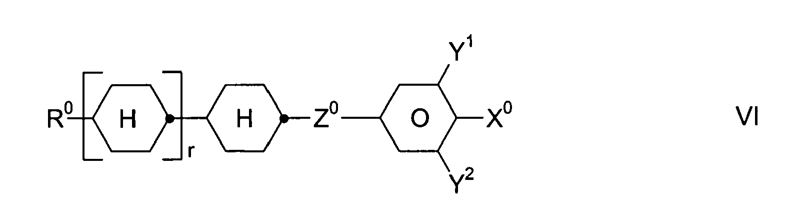 dans lesquelles les radicaux individuels présentent les significations qui suivent :
R⁰ n-alkyle, oxaalkyle, fluoroalkyle ou alkényle dont chacun comporte jusqu'à 9 atomes de C ;
X⁰ F, CI, alkyle halogéné, alkényle halogéné, alkényloxy halogéné ou alkoxy halogéné comportant jusqu'à 6 atomes de C,
Z⁰ C₂F₄-, -CF=CF-, -C₂H₄-, -(CH₂)₄-, -OCH₂-, -CH₂O-, -CF₂O- ou -OCF₂-,
Y¹ à Y⁴ chacun indépendamment les uns des autres, H ou F,
r 0 ou 1.

4. Milieu de cristal liquide selon la revendication 3, **caractérisé en ce que** la proportion de composés des formules I à VI ensemble dans le mélange pris dans sa globalité est d'au moins 50% en poids.

5. Milieu de cristal liquide selon au moins l'une des revendications 1 à 4, **caractérisé en ce qu'**il comprend de façon additionnelle un ou plusieurs composés des formules E-a à E-d 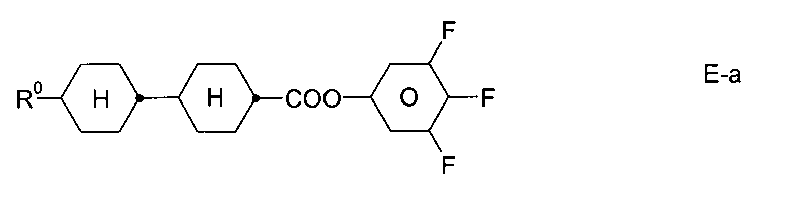 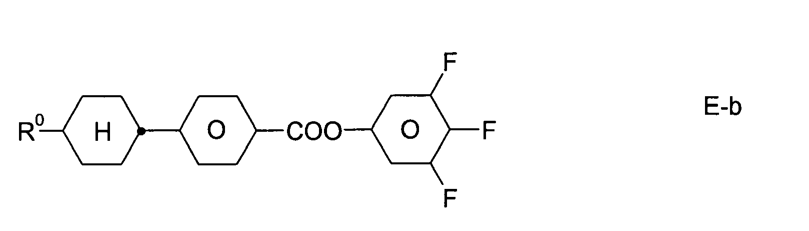 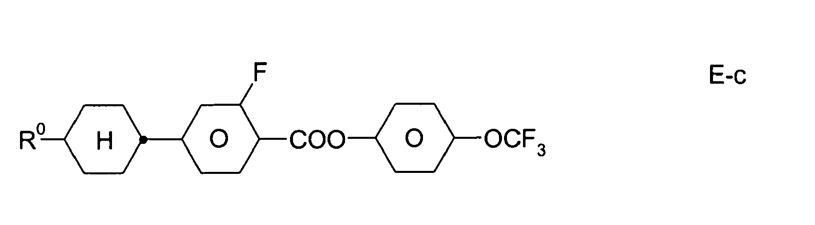 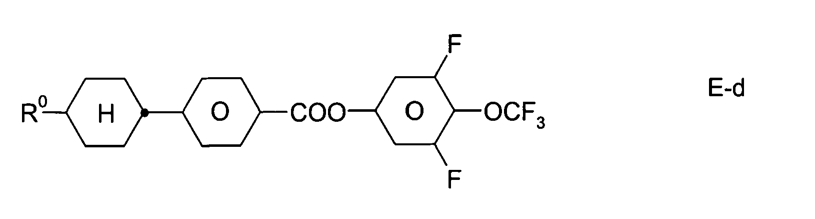 dans lesquelles R⁰ présente les significations indiquées selon la revendication 3.

6. Milieu de cristal liquide selon au moins l'une des revendications 1 à 5, **caractérisé en ce qu'**il comprend un ou plusieurs composés des formules IIa à IIg 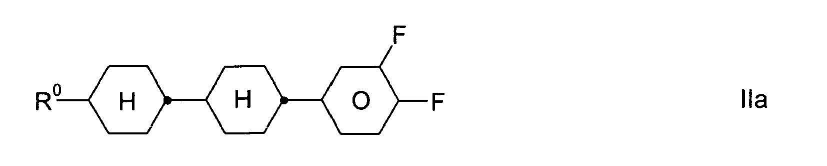 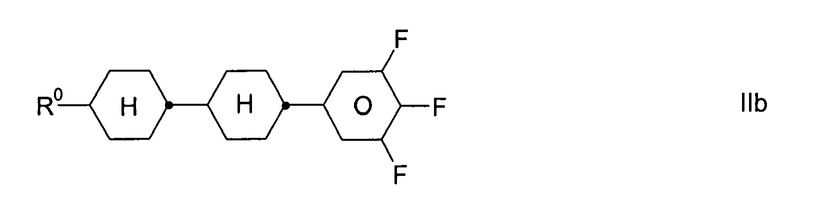 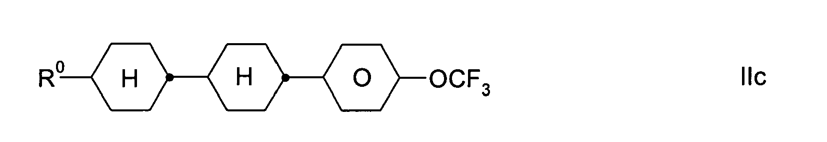 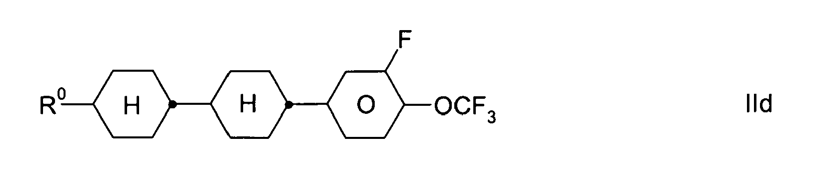 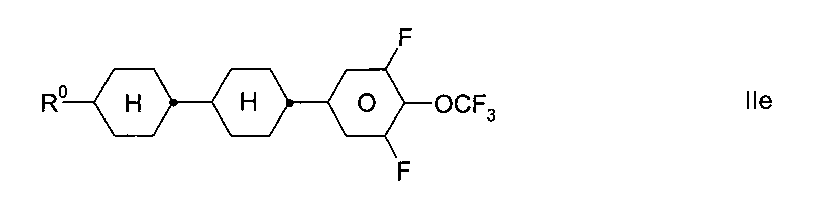 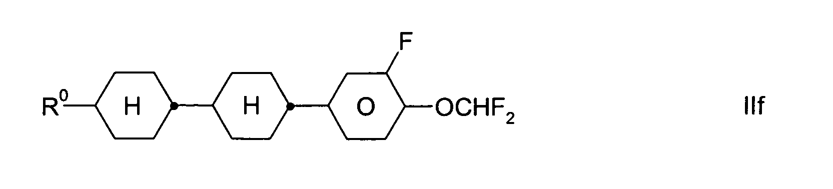 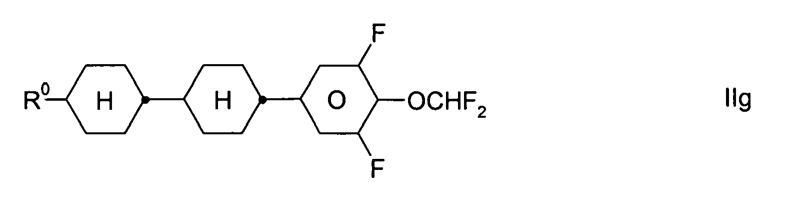 dans lesquelles R⁰ présente les significations indiquées selon la revendication 3.

7. Milieu de cristal liquide selon l'une des revendications 1 à 6, **caractérisé en ce qu'**il comprend un ou plusieurs composés des formules O1 et O2 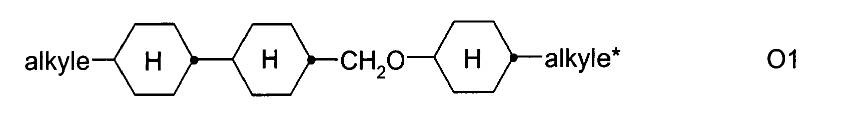 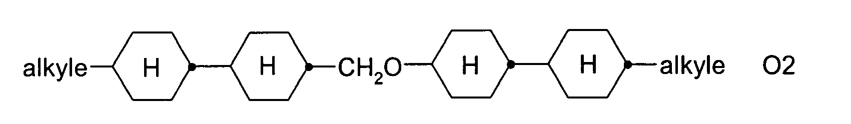 dans lesquelles
alkyle et alkyle*, chacun indépendamment de l'autre, représentent un groupe alkyle en chaîne droite ou ramifié comportant de 1 à 7 atomes de carbone.

8. Milieu de cristal liquide selon l'une des revendications 1 à 7, **caractérisé en ce qu'**il comprend un ou plusieurs composés de dioxane des formules D1 et/ou D2 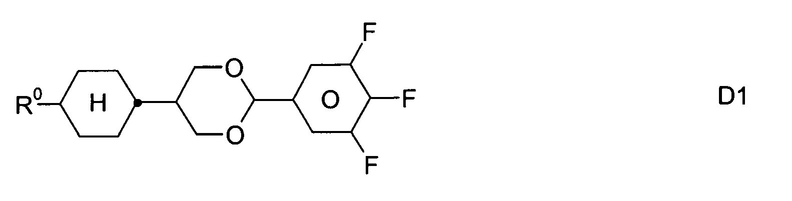 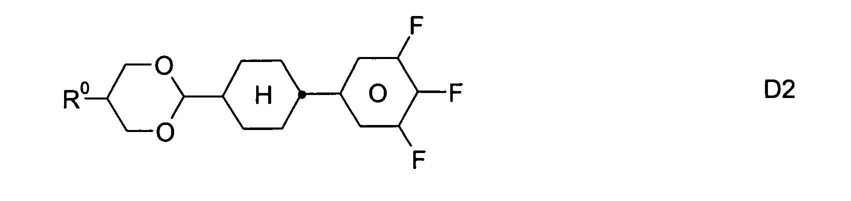 dans lesquelles
R⁰ présente les significations indiquées selon la revendication 3.

9. Milieu de cristal liquide selon au moins l'une des revendications 1 à 8, **caractérisé en ce que** R⁰ représente n-alkyle comportant de 2 à 7 atomes de C ou fluoroalkyle ou alkényle comportant jusqu'à 9 atomes de C.

10. Milieu de cristal liquide selon au moins l'une des revendications 1 à 9, **caractérisé en ce que** la proportion de composés de la formule I dans le mélange pris dans sa globalité est de 0,5 à 40% en poids.

11. Utilisation du milieu de cristal liquide selon au moins l'une des revendications 1 à 10 à des fins électro-optiques.

12. Affichage à cristaux liquides électro-optique contenant un milieu de cristal liquide selon au moins l'une des revendications 1 à 10.
